# EUROPEAN PATENT SPECIFICATION

(11) **EP 1 035 179 B1**
(45) Date of publication and mention of the grant of the patent: **22.02.2006**
(21) Application number: 00301396.8
(22) Date of filing: 22.02.2000
(51) Int. Cl.: C09D 11/00

(54) **Ink-jet printing ink compositions having superior smear-fastness**
Tintenzusammensetzungen für Tintenstrahldrucker mit hoher Schmierfestigkeit
Compositions d'encre pour impression par jet d'encre possédant une meilleure résistance aux tachetures

(30) Priority: 09.03.1999 US 265185
(43) Date of publication of application: 13.09.2000
(73) Proprietor: Hewlett-Packard Company, Palo Alto, CA 94304 (US)
(72) Inventor: Ganapathiappan, Sivapackia, Los Altos CA 94022 (US); Nguyen, Khe C., Los Altos, CA 94024 (US)
(74) Representative: Jackson, Richard Eric

(56) References cited:
- EP-A- 0 068 903
- EP-A- 0 796 901
- WO-A-99/23183
- DE-A- 2 845 375
- US-A- 5 160 372

## Description

### TECHNICAL FIELD

The present invention relates generally to ink-jet printing ink compositions having superior smearfastness, as compared to prior art ink-jet ink printing compositions, and, more particularly, to the use of core/shell and other polymers, or binders, with hydrophobic and hydrophilic portions that contribute to such superior smearfastness and additives to the inks that improve their print reliability.

### BACKGROUND ART

Core/shell polymers are well-known; such polymers typically have a hydrophilic portion and a hydrophobic portion comprising a latex particle morphology consisting of an inner "core", surrounded by an outer "shell". Core/shell polymers are commonly used to disperse molecules or particles, such as pigments, which are ordinarily insoluble in water, but which, after association with the core/shell polymer, form stable dispersions in water. Dispersion occurs when the hydrophobic portion of the polymer associates with the water-insoluble molecule or particle, and the hydrophilic portion of the polymer disperses with water.

U.S. Patent 4,597,794 discloses the dispersion of pigments in an aqueous vehicle, using aqueous binders comprising both hydrophilic and hydrophobic components. The dispersion of the pigment is followed by centrifugation to eliminate the non-dispersed components such as agglomerates. Examples of the hydrophilic component comprise polymers of monomers having a mainly additively polymerizable vinyl group, into which hydrophilic construction portions such as carboxylic acid groups, sulfonic acid groups, sulfate groups, etc. are introduced by using a predetermined amount of an α,β-unsaturated monomer such as acrylic acid, methacrylic acid, crotonic acid, itaconic acid, itaconic acid monoester, maleic acid, maleic acid monoester, fumaric acid, fumaric acid monoester, vinyl sulfonic acid, sulfoethyl methacrylate, sulfopropyl methacrylate, sulfonated vinylnaphthalene, etc. Examples of the hydrophobic portion comprise polymers of monomers selected from the group consisting of styrene, styrene derivatives, vinylnaphthalene, vinylnaphthalene derivatives, and α,β-ethylenic unsaturated carboxylate of aliphatic alcohol having C₈-C₁₈. In addition to the foregoing monomers, also included are acrylonitrile, vinylidene chloride, α,β-ethylenic unsaturated carboxylate, vinyl acetate, vinyl chloride, acrylamide, methacrylamide, hydroxyethyl methacrylate, hydroxypropyl methacrylate, glycidyl methacrylate, N-methylol acrylamide, N-butoxymethyl acrylamide, etc.

U.S. Patent 5,082,757 discloses encapsulated toner compositions comprising a core and a hydroxylated polyurethane microcapsule shell derived from the polycondensation of a polyisocyanate and a water soluble carbohydrate. The core comprises a polymer binder, pigment, dye, or mixtures thereof. Examples of the polymer binder include polymerized monomers selected from the group consisting of acrylates, methacrylates, and olefins including styrene and its derivatives.

U.S. Patent 5,461,125 discloses waterborne core-shell latex polymers useful as adhesive films, rather than super-dispersion stability. The core comprises a (co)polymer comprising a (meth)acrylate ester, while the shell comprises a copolymer, the copolymer comprising (1) a nitrogen-bearing ethylenically-unsaturated free-radically polymerizable monomer, (2) at least one (meth)acrylate ester of about a C₁ to C₁₄ alcohol, and (3) an optional ethylenically-unsaturated free-radically polymerizable silane monomer, wherein the nitrogen-bearing ethylenically-unsaturated free-radically polymerizable monomer comprises about 15 to 60 wt% of the shell and wherein the core comprises about 40 to 85 wt% of the weight of the total core-shell latex particle. The polymers obtained by practicing the teachings of the disclosure have molecular weights of 400,000 or more, and the total low T_{g} component (less than -10°C), where T_{g} is the glass transition temperature, is greater than 60 wt%.

U.S. Patent 5,656,071 discloses ink compositions useful for ink-jet applications. These compositions include an insoluble pigment and a polymeric dispersant. In one embodiment, the polymeric dispersant comprises block or graft copolymers comprising a hydrophilic polymeric segment (particularly an acrylate or methacrylate copolymer) and a hydrophobic polymeric segment which includes a hydrolytically stable siloxyl substituent.

Heretofore, ink-jet printers have not had printing performance and durable print properties of competitive printer technologies. The foregoing cited patents do not provide for useful, durable film-forming properties upon removal of the water or solvent. Film durability includes wet and dry rub resistance, highlighter smearfastness, lightfastness, and waterfastness (e.g., hot and cold water, under spill, soak, and rub conditions).

In particular, formulating an ink-jet ink often involves compromising competing interests. For example, it is possible to enhance one property, such as durable film-forming of the colorant. However, such enhancement usually results in the degradation of another property, such as printing stability associated in thermal ink-jet with resistor fouling or nozzle clogging (kogatiou or decap - nozzle crusting).

Many thermal ink-jet inks exhibit poor smearfastness due to the aqueous solubility of the colorant and/or the dispersibility of the colorant. Efforts continue to develop ink-jet printing ink compositions that evidence the level of smearfastness that a water-insoluble colorant, such as a pigment, possesses, while retaining other desirable printing characteristics.

### DISCLOSURE OF INVENTION

The present invention provides an ink-jet printing ink composition comprising a vehicle and a colorant, wherein said composition further includes at least one latex polymeric binder to increase smearfastness of said composition and an amine-containing additive to said vehicle, said latex polymeric binder having a formula given by

[(A)ₘ(B)ₙ(C)ₚ(D)_{q}(E)ᵣ(F)ₛ]ₓ

wherein A, B, C, D, E, and F are moieties as follows:
A = at least one hydrophobic component contributing to improved durable, film-forming properties selected from moieties which, when homopolymerized to a solid state, have a glass transition temperature (T_{g}) in the range between -150° and +25° C, wherein said A monomer moiety is

C(R₁)(R₂)=C(R₃)R₄R₅,

where
R₁ and R₂ are independently hydrogen, halogen, alkyl, aryl, or substituted alkyl or aryl, or vinyl butyral,
R₃ is hydrogen, halogen, saturated or unsaturated alkyl, alkoxy, aryl, or substituted alkyl, alkoxy, or aryl,
R₄ is direct bond, O, CO, NH, halogen, saturated or unsaturated alkyl, aryl, or substituted alkyl, aryl, or CN,
R₅ is absent (if R₄ is alkyl, aryl, or substituted alkyl or aryl), direct bond, hydrogen, NH, O, alkyl, alkylene, aryl, or substituted alkyl, alkylene, or aryl, and
R₆ is absent (if R₄ is alkyl, aryl, or substituted alkyl or aryl or if R₅ is hydrogen, alkyl, aryl, or substituted alkyl or aryl), NH₂, saturated or unsaturated alkyl, alkoxy, aryl, aroxy, or substituted alkyl, or aryl, and where said alkyl, alkylene, aryl, alkoxy, and aroxy each contain more than 1 carbon atom and less than 40 carbon atoms;
B = at least one hydrophobic and solvent barrier moiety used to adjust the T_{g} of the hydrophobic component of said polymer which, when homopolymerized to a solid state, has a T_{g} greater than 25° C, wherein said B monomer moiety is

CR₁R₂=C(R₃)R₄R₅R₆

where
R₁ and R₂ are independently selected from hydrogen, halogen, and vinyl butyral,
R₃ is hydrogen, halogen, alkyl, alkoxy, alkylene, aryl, or substituted alkyl, alkoxy, alkylene, or aryl,
R₄ is direct bond, O, CO, N, NO₂, halogen, alkyl, alkylene, aryl, or substituted alkyl, alkylene, aryl,
R₅ is hydrogen, N, O, alkyl, alkylene, aryl, or substituted alkyl, alkylene, or aryl, and
R₆ is alkyl, alkoxy, alkylene, aryl, aroxy, or substituted alkyl, alkylene, or aryl, and where said alkyl, alkylene, aryl, alkoxy, and aroxy each contain from 1 to 40 carbon atoms, where R₁ and R₂ and R₂ and R₃ can each form a ring, and where R₄ and R₅ can form a ring through nitrogen or oxygen;
C = at least one hydrophilic component comprising a water-soluble monomer; wherein said C monomer moiety is selected from the group consisting of

(a) 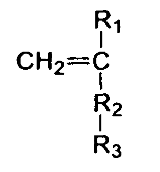 where
   R₁ = H, halogen, alkyl, aryl, or substituted alkyl or aryl;
   R₂ = direct bond, O, CO, NH, or CONH;
   R₃ = OH, (CH₂CH₂O)_{y}R₄, (CH₂CH(CH₃)O)_{y}R₄, or (CH₂CH(C₂H₅)O)_{y}R₄, SH, (CH₂CH₂S)_{y}R₄, (CH₂CH(CH₃)S)_{y}R₄, or (CH₂CH(C₂H₅)S)_{y}R₄;
   y = 1 to 200; and
   R₄ = alkyl, aryl, substituted alkyl or aryl;
(b) 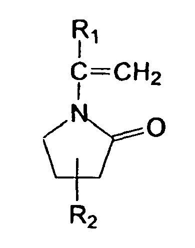 where R₁ and R₂ are independently selected from H, halogen, alkyl, aryl, and substituted alkyl and aryl, where said alkyl and aryl each contain from 2 to 40 carbon atoms;
(c) 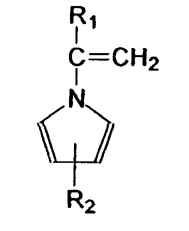 where R₁ and R₂ are independently selected from H, halogen, alkyl, aryl, and substituted alkyl and aryl;
(d) 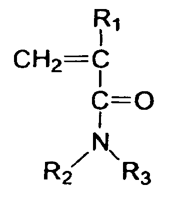 where
   R₁ = H; halogen, alkyl, aryl or substituted alkyl or aryl; and
   R₂ and R₃ are either independently selected from alkyl, aryl, and substituted alkyl and aryl or can form either an aliphatic ring or an aromatic ring;
   D = at least one UV absorber;
   E = at least one moiety having at least one highly polar functional group;
   F = a moiety having at least one aldehyde functional group;
   m = 10 to 90 wt%;
   n = 10 to 90 wt;
   p = 0 to 60 wt%;
   q = 0 to 50 wt%;
   r = 0 to 40 wt%;
   s = 1 to 30 wt%;
   m + n + p + q + r + s = 100 wt%; and
   x = 1 to 100,000,

   wherein said polymer has either hydrophobic and hydrophilic moieties or has only hydrophobic moieties and is associated with said surfactant to form a polymer/surfactant system, said polymer or polymer/surfactant system capable of forming a film from water, which, upon dehydration, is essentially resistant to water, said polymer having a T_{g} within the range of about -10° to +110° C, said amine-containing additive consisting essentially of a water-soluble or water-dispersible amine, polyamine, or amine alcohol, said amine alcohol having a formula given by 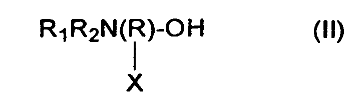
   where R₁ and R₂ are independently selected from the group consisting of hydrogen, alkyl, alkoxy, aryl, and phenoxy, R is alkylene, X is hydrogen, alkyl, aryl, -OH, -COOH, and -CHO; with the proviso that at least one of the moieties C and E are present in the polymer.

The molecular weight (weight average) of polymer (I) is between about 5,000 and 5,000,000.

The polymers useful in the practice of the invention are prepared by emulsifying the monomers and then conducting a free-radical polymerization in water.

The amine-containing vehicles employed in the practice of the present invention are employed as an additive to the aqueous-based vehicle, which contains one or more water-miscible organic co-solvents.

The ink formulation of the present invention comprises:
5 to 50 wt% water-miscible solvent;
0.5 to 10 wt% colorant;
0.1 to 10 wt% latex polymeric binder,
0.01 to 10 wt% amine-containing additive; and
water.

The functional groups and amine-containing additives described above chemically react with cellulosic media such as plain papers, textiles, and paper coatings containing cellulosic components. The reactivity is achieved by including moiety F above in the latex binder and by including the amine-containing additive in the ink.

Without subscribing to any particular theory, it appears that the functional groups allow the latex binder to react with cellulosic materials to form a permanent attachment and thus a smearfast ink.

Employing the latex binder with functional groups as listed above in an aqueous ink permits permanent printing of ink on print media, such as plain paper, textiles, etc., and gives rise to a significant enhancement of smear fastness, especially against highlight markers, which rivals that of a laser or xerographic print. While printing on plain paper may be performed, however, the drying times of the inks may require longer drying times than other ink-jet inks and thus heating elements may be necessary. On the other hand, printing on textiles, such as cotton T-shirts, eliminates printing first on a transfer medium, which is then printed onto the fabric. Instead, the inks of the present invention permit direct printing onto the fabric, and the printed ink is fixed on the fabric by a heating means, such as a hot iron.

### BRIEF DESCRIPTION OF THE DRAWINGS

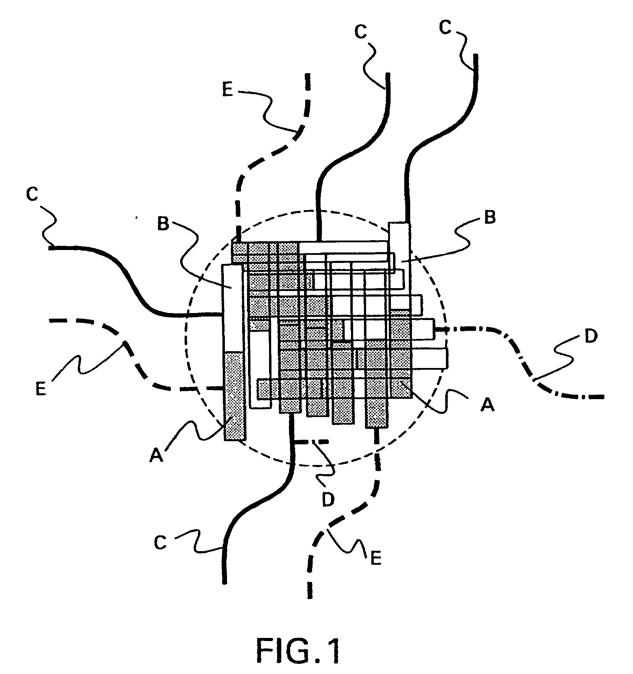

The sole Figure is a schematic diagram of the film-forming, water-dispersive polymer used in the practice of the present invention.

### BEST MODES FOR CARRYING OUT THE INVENTION

### Definitions

The following definitions are made:
The term "core/shell polymer" means a water-dispersive polymer comprised of a solid hydrophobic core surrounded by (either physically or chemically) a water-soluble shell component, or similar polymers of undefined morphology containing a mixture of hydrophobic and hydrophilic groups. This is often referred to herein as a "latex polymer".
The term "substituted" is meant to include alcohols (OH), esters (COOR), aldehydes (CHO), carboxylic acids (COOH), thiols (SH), amino groups (NH₂, NHR, NR₂) nitro group (NO₂), nitriles (CN), isocyanides (NC), cyanates (CNO), isocyanates (NCO), amido groups, epoxies, halogens, siloxanes, and pyrridinyls. The term "halogen" is meant to include fluorine, chlorine, bromine, and iodine.

All concentrations are given in terms of weight percent (wt%), unless otherwise specified. All values of molecular weight of polymers are given in terms of weight average.

### Monomeric Moieties

In latex binders given by formula (I) when homo-polymerised to a solid state has a glass transition temperature (T_{g}) in the range between preferably -100° to + 10°C, more preferably from -60° to +0°C;

Preferably, the latex polymer has the structure given by formula (I')

[(A)ₘ (B)ₙ (C')ₚ (F)ₛ]ₓ (I')

where A, B and F are as defined above, C' is either C or E or both C and E, m< 30 wt%, n >40 wt%, p<30 wt%, and s <30 wt%.

The molecular weight (weight average) of polymer (I) or (I') is between 1,000 and 2,000,000, preferably between 5,000 and 500,000, and most preferably between 10,000 and 70,000.

Preferably, the final T_{g} of the polymer(s) (I) or (I') is within the range of -25° to +110°C, and more preferably, the final T_{g} is within the range of -15° to +90°C, and most preferably within the range of -10° to +75°C.

The polymer (I) or (I') is designed to have both hydrophobic and hydrophilic moieties. Thus, the polymer is both (1) water-dispersible, and includes water-soluble polar groups, which are present in sufficient quantity to suspend a pigment particle, and (2) hydrophobic, with a substantial fraction of the polymer containing hydrophobic moieties that are either highly water-resistant or even water-insoluble.

The hydrophobic *A* moiety allows the polymer to have a sufficiently low T_{g} to permit formation of a film with other polymer molecules containing the A moiety. The film formation results upon drying (removal of water).

The hydrophobic *B* moiety in combination with the hydrophobic A moiety provides the polymer with resistance to environmental solvents, such as water and those found in highlighter pens. Additional environmental solvents can be found in rain, coffee, soda pop, body oils, soils, hot water, etc.

The hydrophilic *C* moiety may be provided in the polymer itself, as shown in formula (I). At least one *C* moiety may be present, and is water-soluble. If present, such water-soluble moieties comprise an ionic or non-ionic shell of the core-shell polymer. Alternatively, the *C* moiety may be provided by one or more surfactants, to form a polymer/surfactant system. Any of the ionic (anionic and cationic), non-ionic, and zwitterionic (amphoteric) surfactants may be employed. A representative listing of applicable surfactant can be found in McCutcheon's Emulsifiers and Detergents, North American Edition, 1997, McCutcheon's Division, MC Publishing Co. 175 Rock road, Glen Rock, NJ 07452 USA Examples of surfactants that may be beneficially employed in the practice of the present invention include: TERGITOLs, which are polyethylene or polypropylene oxide ethers; alkyl phenyl polyethylene oxides available under the tradenane TRITONS, ; BRIJs, which are polyethylene or polypropylene oxide ethers; PLURONICs, which are also polyethylene/o polypropylene oxide copolymers from BASF; and the SURFYNOLs, which are acetylenic ethoxylated diols; polyethylene oxide (POE) esters; POE diesters; POE amines; protonated POE amines; POE amides; the polypropylene analogs of the foregoing POE compounds; dimethicone copolyols; quaternary ammonium compounds; AEROSOLS, including sulfosuccinates; ethoxylates, amine oxides, and betaines.

Preferred examples of non-ionic surfactants include, but are not limited to, BRIJs, which are polyethylene oxide ethers, available from ICI Surfactants (specific examples include the following BRIJs: 30, 35, 52, 56, 58, 72, 76, 78, 92, 97, and 98); TWEENs, which are derivatives of polyethylene oxides, available from ICI Surfactants (specific examples include the following TWEENs: 20, 40, 60, 80, and 85); SOLSPERSE 27,000, which is an aromatic ethoxylate, available from Zeneca; SPAN 85, which is available from Air Products; and SURFYNOLs, which are acetylenic ethylene oxides available from Air Products. Examples of anionic surfactants include AEROSOL DPOS 45, which is a sulfate, available from Cytec Industries; sodium octadecyl sulfonate; dioctyl ester of sodium sulfosuccinic acid; AEROSOL OT 100%, which is a sulfate, available from American Cyanamid; and sodium lauryl sulfonate. The preferred surfactants include SURFYNOL 465 and SOLSPERSE 27,000.

If used, the amount of surfactant ranges from about 0.001 to 30 wt%, and the balance the polymer.

Optionally, one or more UV absorber moieties *D* may be present. The UV absorber contains a UV blocking chromophore, which imparts lightfastness to the polymer.

Also optionally, one or more ionic water-soluble, dispersible moieties *E* may be present. If present, such water-soluble moieties comprise an ionic shell of the core-shell polymer.

Although the *C* and *E* moieties are indicated as being optional, at least one of these two moieties must be present in the polymer.

The *F* moiety contains an aldehyde functional group which react with cellulose to thereby form a permanent attachment of the core-shell binder in the ink to the cellulose structure. Such permanent attachment renders the printed ink waterfast and smearfast on the cellulosic material.

One moiety (monomer) may be employed to provide one or more of the foregoing functions. Alternatively, one function may be provided by one or more of the foregoing moieties. However, in many instances, a single moiety provides a single function.

Typically, the polymer(s) of the present invention is prepared by emulsifying the monomeric components, and then conducting a free-radical polymerization in water. Free-radical polymerization involves employing a free-radical initiator. A concentration of about 0.001 to 10 wt% of the initiator is employed in the total monomer system. Examples of suitable free-radical initiators include, but are not limited to, ammonium persulfate, potassium persulfate, hydrogen peroxide, benzoyl peroxide, azobisisobutyronitrile, TRIGONOX 21, and PERKADOX 16. Preferably, the resulting polymer (I) is a random polymer.

Two or more moieties (monomers) may be copolymerized. Alternatively, two or more polymers may be blended together.

One skilled in this art would understand that the polymer(s) can also be prepared by conventional condensation techniques. Once a film is formed from the polymer and water is removed, as by dehydration under ambient conditions, the film is essentially impervious to water, and the polymer is not capable of being redispersed with water. If the polymer or polymer/surfactant system is associated with pigment particles, and the pigment with polymer or polymer/surfactant system is deposited on a surface, such as paper, then the pigment particles are trapped within or beneath the film on the surface, and are thus protected from the effects of water and environmental solvents.

The sole Figure illustrates a molecule of polymer (I). Moieties *A* and *B* form a solid core. The *C* moiety forms a non-ionic, water-soluble shell. The *D* moiety is a UV absorber. The *E* moiety forms an ionic, water-soluble or water-insoluble shell. The *F* moiety (not shown) forms either a water-soluble shell if it is a short chain or is part of the core if it is a long alkyl chain.

As stated above, the *A* moiety is a hydrophobic component for controlling solubility in organic solvents selected from monomer(s) that form homopolyers having a T_{g} in the range between -150° and +25°C. The *A* moiety is preferably selected from ethylenically-substituted compounds given by (A), as defined above

In the groups R₁, R₂, R₃, R₄, R₅ and R₆, the alkyl, alkoxy, alkylene, and aryl chains each contain more than one carbon atom and less than 40 carbon atoms. Preferably, the R₄ functionality is an electron acceptor moiety.

One preferred embodiment of formula (A) is the following general structure (A1): 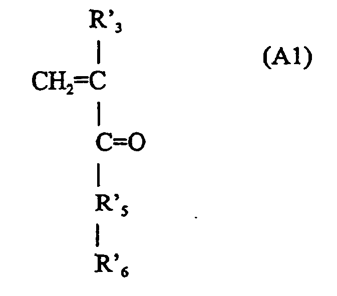 where
R'₃ = H, halogen, alkyl, aryl or substituted alkyl or aryl;
R'₅ = direct bond, O, or NH; and
R'₆ = alkyl, substituted alkyl, alkylaryl or substituted alkylaryl and aralkyl in which the length of alkyl, alkylaryl or aralkyl chain is given as the number of C atoms between 2 and 40; and alkyl or aryl siloxanes.

Examples for structure (A1) include, but are not limited to:
(A1-1) ethyl acrylate;
(A1-2) ethyl methacrylate;
(A1-3) benzyl acrylate;
(A1-4) benzyl methacrylate;
(A1-5) propyl acrylate;
(A1-6) propyl methacrylate;
(A1-7) iso-propyl acrylate;
(A1-8) iso-propyl methacrylate;
(A1-9) butyl acrylate;
(A1-10) butyl methacrylate;
(A1-11) hexyl acrylate;
(A1-12) hexyl methacrylate;
(A1-13) octadecyl methacrylate;
(A1-14) octadecyl acrylate;
(A1-15) lauryl methacrylate;
(A1-16) lauryl acrylate;
(A1-17) hydroxyethyl acrylate;
(A1-18) hydroxyethyl methacrylate;
(A1-19) hydroxyhexyl acrylate;
(A1-20) hydroxyhexyl methacrylate;
(A1-21) hydroxyoctadecyl acrylate;
(A1-22) hydroxyoctadecyl methacrylate;
(A1-23) hydroxylauryl methacrylate;
(A1-24) hydroxylauryl acrylate;
(A1-25) phenethyl acrylate;
(A1-26) phenethyl methacrylate;
(A1-27) 6-phenylhexyl acrylate;
(A1-28) 6-phenylhexyl methacrylate;
(A1-29) phenyllauryl acrylate;
(A1-30) phenyllauryl methacrylate;
(A1-31) 3-nitrophenyl-6-hexyl methacrylate;
(A1-32) 3-nitrophenyl-18-octadecyl acrylate;
(A1-33) ethyleneglycol dicyclopentyl ether acrylate;
(A1-34) vinyl ethyl ketone;
(A1-35) vinyl propyl ketone;
(A1-36) vinyl hexyl ketone;
(A1-37) vinyl octyl ketone;
(A1-38) vinyl butyl ketone;
(A1-39) cyclohexyl acrylate;
(A1-40) 3-methacryloxypropyldimethylmethoxysilane;
(A1-41) 3-methacryloxypropylmethyldimethoxysilane;
(A1-42) 3-methacryloxypropylpentamethyldisiloxane;
(A1-43) 3-methacryloxypropyltris(trimethylsiloxy)silane;
(A1-44) 3-acryloxypropyldimethylmethoxysilane;
(A1-45) acryloxypropylmethyldimethoxysilane;
(A1-46) trifluoromethyl styrene;
(A1-47) trifluoromethyl acrylate;
(A1-48) trifluoromethyl methacrylate;
(A1-49) tetrafluoropropyl acrylate;
(A1-50) tetrafluoropropyl methacrylate;
(A1-51) heptafluorobutyl methacrylate;
(A1-52) iso-butyl acrylate;
(A1-53) iso-butyl methacrylate;
(A1-54) 2-ethylhexyl acrylate;
(A1-55) 2-ethylhexyl methacrylate;
(A1-56) iso-octyl acrylate; and
(A1-57) iso-octyl methacrylate.

Another preferred embodiment for formula (A) is the following general structure (A2): 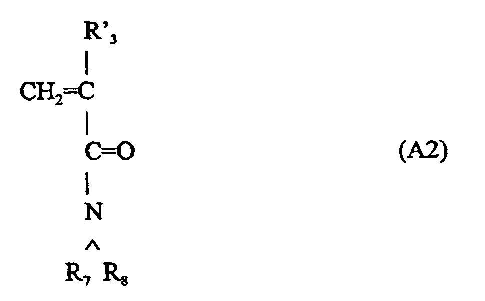 where
R'₃ = same definition as that of structure (A1) above; and
R₇ = R₈ = same or different combinations of R'₆ in structure (A1) above.

An example for structure (A2) includes, but is not limited to:
(A2-1) N,N-dihexyl acrylamide; and
(A2-2) N,N-dioctyl acrylamide.

Yet another preferred embodiment for formula (A) is the following general structure (A3): 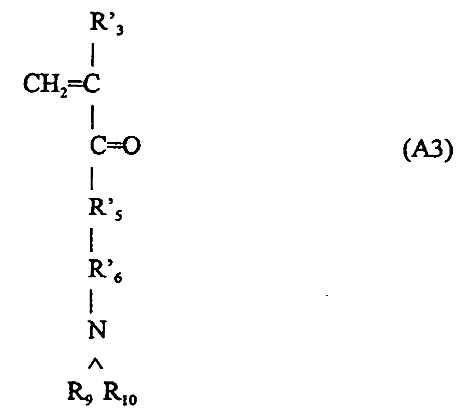 where
R'₃ = same definition as that of structure (A1);
R'₅= same definition as that of structure (A1);
R'₆ = alkylene, arylene, substituted alkylene or arylene; and
R₉ and R₁₀ are independently selected from H, alkyl, substituted alkyl, alkylaryl or substituted alkylaryl in which the length of alkyl and alkylaryl chains each comprise between 2 and 40 C atoms. Alternatively, R₉ and R₁₀ together may form a 5-or 6-membered ring.

Examples for structure (A3) include, but are not limited to:
(A3-1) aminoethyl acrylate;
(A3-2) aminopropyl acrylate;
(A3-3) aminopropyl methacrylate;
(A3-4) aminoisopropyl acrylate;
(A3-5) aminoisopropyl methacrylate;
(A3-6) aminobutyl acrylate;
(A3-7) aminobutyl methacrylate;
(A3-8) aminohexyl acrylate;
(A3-9) aminohexyl methacrylate;
(A3-10) aminooctadecyl methacrylate;
(A3-11) aminooctadecyl acrylate;
(A3-12) aminolauryl methacrylate;
(A3-13) aminolauryl acrylate;
(A3-14) N,N-dimethylaminoethyl acrylate;
(A3-15) N,N-dimethylaminoethyl methacrylate;
(A3-16) N,N-diethylaminoethyl acrylate;
(A3-17) N,N-diethylaminoethyl methacrylate; and
(A3-18) piperidino-N-ethyl acrylate.

Still another preferred embodiment for formula (A) is the following general structure (A4): 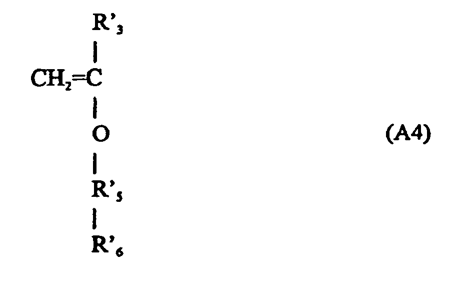 where:
R'₄ = H, halogen, alkyl, aryl, sustituted alkyl or aryl;
R'₅ = direct bond, CO, alkylene, arylene, substituted alkylene or arylene; and
R'₆ = alkyl, aryl, substituted alkyl or aryl.

Examples for structure (A4) include, but are not limited to:
(A4-1) vinyl propionate;
(A4-2) vinyl acetate;
(A4-3) vinyl butyrate;
(A4-4) vinyl butyl ether; and
(A4-5) vinyl propyl ether.

As stated above, the B moiety is hydrophobic and is a solvent barrier composed of monomer(s) that form homopolymers having a T_{g} greater than 25°C. The B moiety has the general structure given by formula (B), as defined above.

In formula B, the R₁, R₂, R₃, R₄, R₅ and R₆, the alkyl, alkoxy, alkylene, aryl, aroxy chains each contain from 1 to 40 carbon atoms. Additionally, R₁ and R₂ and R₂ and R₃ can each form a ring; one example of a ring compound so formed includes, but is not limited to, polyvinyl butryal. Further, R₄ and R₅ can form a ring through either nitrogen or oxygen.

Formula (B) is seen to be substantially the same as formula (A), but with some differences in the substituent groups, which provide a homopolymer of these monomers with the higher T_{g} of at least 25°C.

One preferred embodiment of formula (B) is the following general structure (B1):

CH₂=CR'"₅R'"₆ (B1)

where R"'₅ = hydrogen, alkyl, alkoxy, aryl or halogen; and
R"'₆ = H, aryl, alkyl (with one carbon atom), amino, ester, epoxy component containing groups, and fluoroalkyl derivatives.

Examples for formula (B1) include, but are not limited to;
(B1-1) ethylene;
(B1-2) styrene;
(B1-3) vinyl carbazole;
(B1-4) vinyl naphthalalene;
(B1-5) vinyl anthracene;
(B 1-6) vinyl pyrene;
(B1-7) methyl methacrylate;
(B1-8) methyl acrylate;
(B1-9) alpha-methyl styrene;
(B1-10) dimethylstyrene;
(B1-11) methylstyrene;
(B1-12) vinylbiphenyl;
(B1-13) glycidyl acrylate;
(B1-14) glycidyl methacrylate;
(B1-15) glycidyl propylene;
(B1-16) 2-methyl-2-vinyl oxirane;
(B1-17) vinyl pyrridine;
(B1-18) aminoethyl methacrylate; and
(B1-19) aminoethylphenyl acrylate.

Another preferred embodiment of formula (B) is the following general structure (B2): 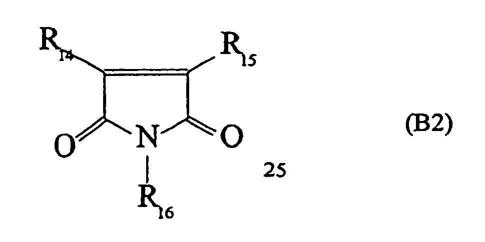 where
R₁₄ and R₁₅ are independently selected from H, halogen, alkyl, aryl, substituted alkyl and aryl; alternatively, R₁₄ and R₁₅ are in the form of a closed ring; and
R₁₆ is H, halogen, alkyl, aryl, substituted alkyl or aryl, or unsaturated alkyl.

Examples for formula (B2) include, but are not limited to:
(B2-1) maleimide;
(B2-2) N-phenyl maleimide;
(B2-3) N-hexyl maleimide;
(B2-4) N-vinylphthalimide; and
(B2-5) N-vinyl maleimide.

As stated above, the C moiety is a hydrophilic component. The C moiety is selected from a wide variety of monomers such as poly(ethylene glycol) units having general formula (C1), vinyl pyrrolidones having general formula (C2), vinyl imidazoles having general formula (C3) and acrylamides having general formula (C4), all of which polymerize to form water-soluble polymers.

The general structure of formula (C1) is 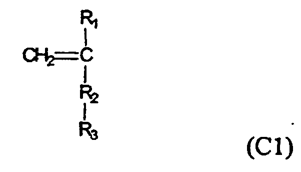 where
R₁ = H, halogen, alkyl, aryl, or substituted alkyl or aryl;
R₂ = direct bond, O, CO, NH, COO, or CONH;
R₃ = OH, (CH₂CH₂O)_{y}R₄, (CH₂CH(CH₃)O)_{y}R₄, or (CH₂CH(C₂H₅)O)_{y}R₄ or the thioether analogs: SH, (CH₂CH₂S)_{y}R₄, (CH₂CH(CH₃)S)_{y}R₄, or (CH₂CH(C₂H₅)S)_{y}R₄;
y = 1 to 200; and
R₄ = alkyl, aryl, substituted alkyl or aryl.

Examples for general structure (C1) include, but are not limited to:
(C1-1) poly(ethylene glycol) methyl ether acrylate of average molecular weight 404;
(C1-2) poly(ethylene glycol) methyl ether methacrylate of average molecular weight 418;
(C1-3) poly(ethylene glycol) methyl ether methacrylate of average molecular weight 2068;
(C1-4) poly(ethylene glycol) methyl ether acrylate of average molecular weight 2054; and
(C1-5) polyvinyl alcohol.

The general structure of formula (C2) is 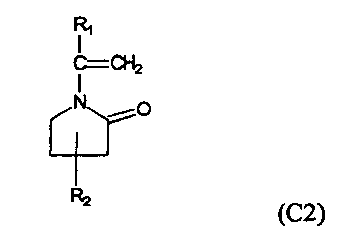
where R₁ and R₂ are independently selected from -H, halogen, alkyl, aryl, and substituted alkyl and aryl.

Examples for general structure (C2) include, but are not limited to:
(C2-1) vinyl pyrrolidone;
(C2-2) vinyl 4-methylpyrrolidone; and
(C2-3) vinyl 4-phenylpyrrolidone.

The general structure of formula (C3) is 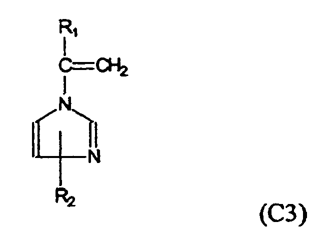
where R₁ and R₂ are independently selected from H, halogen, alkyl, aryl, and substituted alkyl and aryl.

Examples for general structure (C3) include, but are not limited to:
(C3-1) vinyl imidazole;
(C3-2) vinyl 4-methylimidazole; and
(C3-3) vinyl 4-phenylimidazole.

The general structure of formula (C4) is 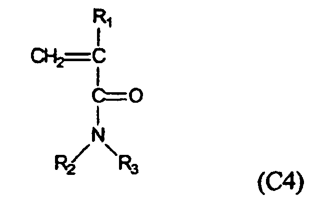 where
R₁ is H, halogen, alkyl, aryl or substituted alkyl or aryl; and
R₂ and R₃ are independently selected from H, alkyl, aryl and substituted alkyl and aryl; alternatively, R₂ and R₃ can form a ring, either aliphatic or aromatic.

Examples for the general structure (C4) include, but are not limited to:
(C4-1) acrylamide;
(C4-2) methacrylamide;
(C4-3) N,N-dirnethyl acrylamide;
(C4-4) N-methyl acrylamide;
(C4-5) N-methyl methacrylamide;
(C4-6) aryloxy piperidine; and
(C4-7) N,N-diethyl acrylamide.

As stated above, the *D* moiety is a UV absorber composed of monomer(s) having the general structure of formula (D) 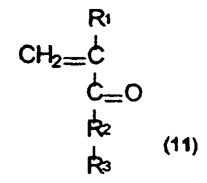
R¹= H, Alkyl, aryl, substituted alkyl or aryl
R²= O or NH
R³=

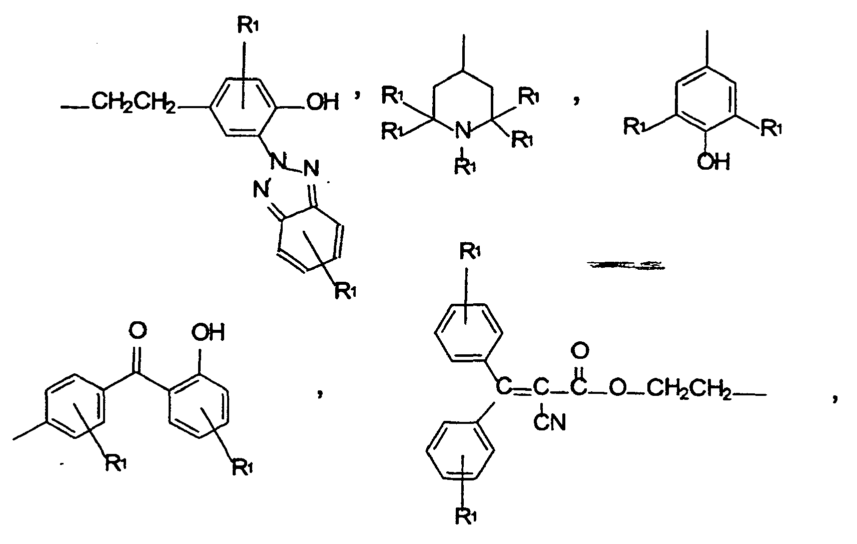

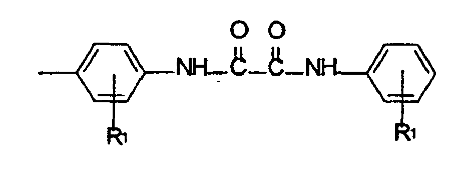

As stated above, the *E* moiety is a highly polar functional group composed of moieties having the general structure given by formulae (E1) to (E10).

The general structure of formula (E1) is

CH(R₁) = C(R₂)R₃COOH (E1)

where
R₁ = H, COOH, COOR₄;
R₂ = H, halogen, alkyl, aryl, alkoxyl, or substituted alkyl, aryl or alkoxyl;
R₃ = direct bond, alkylene, arylene or sustituted alkylene or arylene; and
R₄ = alkyl, aryl, substituted alkyl or aryl.

Examples for structure (E1) include, but are not limited to:
(E1-1) acrylic acid;
(E1-2) methacrylic acid;
(E1-3) chloromethacrylic acid;
(E1-4) maleic acid; and
(E1-5) vinyl benzoic acid.

The general structure of formula (E2) is

CH₂ = CHR₁NR₂R₃ (E2)

where
R₁ = alkylene, arylene, substituted alkylene, arylene, acetals, hemiacetals, -CHO, -COOH, -CH₂OH, or -SO₂; and
R₂ and R₃ are independently selected from H, alkyl, aryl, or substituted alkyl, aryl or alkoxyl; alternatively, R₂ and R₃ can be combined to form a ring, either aliphatic or aromatic.

Examples for structure (E2) include, but are not limited to:
(E2-1) allylamine;
(E2-2) N,N-diethylallylamine; and
(E2-3) vinyl sulfonamide.

The general structure of formula (E3) is

y (CH₂ =CHR₁COO⁻) M^{y+} (E3)

where
R₁ = alkylene, arylene, substituted alkylene or arylene;
y = 1 to 4; and
M^{y+} = NH₄⁺, Li⁺, Na⁺, K⁺, Ca²⁺, Mg²⁺, Al³⁺, Ti⁴⁺, triethylammonium, diethylammonium, pyrridinium, etc.

Examples for structure (E3) include, but are not limited to:
(E3-1) sodium acrylate;
(E3-2) sodium methacrylate;
(E3-3) ammonium acrylate; and
(E3-4) ammonium methacrylate.

The general structure of formula (E4) is 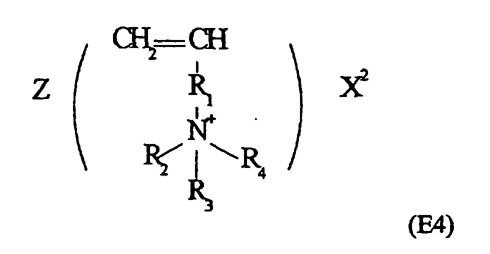 where
R₁ = alkylene, arylene, substituted alkylene or arylene, COO, or cyclic ring containing nitrogen;
R₂, R₃, and R₄ are independently selected from H, alkyl, aryl, alkoxyl, or substituted alkyl, aryl or alkoxyl;
z =1 to 4; and
X = halogen, BF₄, PF₆ , ClO₄, SCN, CNO, CNS.

Examples for general structure (E4) include, but are not limited to:
(E4-1) acrylamidopropanetriethylammonium chloride;
(E4-2) methacrylamidopropanetriethylammonium chloride; and
(E4-3) vinylpyridine hydrochloride.

The general structure of formula (E5) is 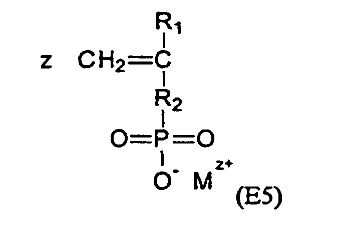 where
R₁ = H, alkyl, aryl, alkoxyl, substituted alkyl, aryl or alkoxyl;
R₂ = direct bond, alkylene, arylene or substituted alkylene or arylene;
z = 1 to 4; and
M^{z+} = NH₄⁺, Li⁺, Na⁺, K⁺, Ca²⁺, Mg²⁺, Al³⁺ Ti⁴⁺, triethylammonium, diethylammonium, pyrridinium, etc.

Examples for the general structure (E5) include, but are not limited to:
(E5-1) sodium vinyl phosphonate; and
(E5-2) sodium 1-methylvinylphosphonate.

The general structure of formula (E6) is 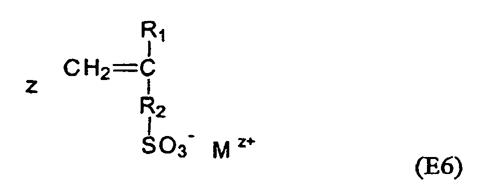 where
R₁ = H, alkyl, aryl, alkoxyl, substituted alkyl, aryl or alkoxyl;
R₂ = direct bond, -COOR₃, arylene, alkylene, or -CONHR₃;
R₃ = alkylene, arylene, substituted alkylene or arylene, or fluoroalkylene;
z = 1 to 4; and
M²⁺ = NH₄⁺, Li⁺, Na⁺, K⁺ Ca²⁺ Mg²⁺, Al³⁺, Ti⁴⁺, etc.

Examples for the general structure (E6) include, but are not limited to:
(E6-1) sodium vinyl sulfonate;
(E6-2) sodium 1-methylvinylsulfonate;
(E6-3) sodium styrenesulfonate;
(E6-4) sodium acrylamidopropanesulfonate;
(E6-5) sodium methacrylamidopropanesulfonate; and
(E6-6) sodium vinyl morpholine sulfonate.

Additional E moieties include the following salts:
(E7) sulfonium salts;
(E8) carbonium salts;
(E9) pyrilinium salt and thio pyrrilinium salt; and
(E10) tetrazolium salt.

The sulfonium salts have the following structure (E7): 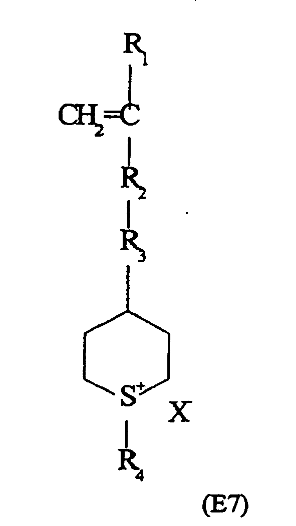 where
R₁ = H, halogen, alkyl, or aryl;
R₂ = CO, O;
R₃ = direct bond, NH;
R₄ = alkyl or aryl; and
X = Cl, Br, BF₄, ClO₄, I, or NO₃.

The carbonium salts have the following structure (E8): 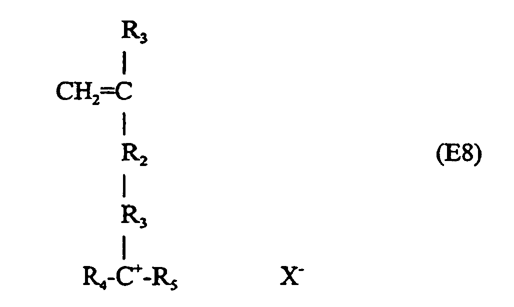 where
R₁ = H, halogen, alkyl, or aryl;
R₂ = CO, O;
R₃ = direct bond, NH, alkylene, or arylene;
R₄ and R₅ are independently selected from alkyl or aryl; and
X = SbF₅⁻,FSO₃⁻.

The pyrrilinium and thiopyrrilinium salts have the following structure (E9): 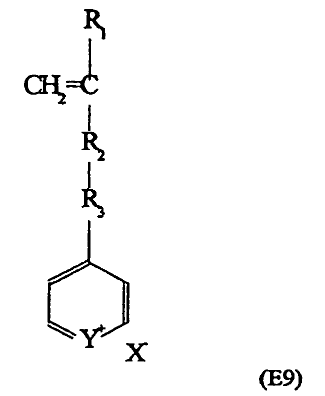 where
Y = O or S;
R₁ = H, halogen, alkyl, or aryl;
R₂ = CO, O;
R₃ = direct bond, NH, alkylene, or arylene;
X = Cl, Br, I, ClO₄, BF₄, etc.

As stated above, the *F* moiety is a functional group that contains an aldehyde functionality (-CHO).

Examples for structure (F1) include, but are not limited to:
(F1-1) acrolein;
(F1-2) acrolein dimethyl acetal;
(F1-3) acrolein diethyl acetal; and
(F1-4) acrolein ethylene acetal.

The use of an aldehyde in the *F* moiety is based on the reaction of this functional groups with hydroxy groups. For example, the reaction of an aldehyde with an alcohol produces a hemiacetal, which can react with an additional alcohol to produce an acetal, which is more stable than a hemiacetal, and water. Since cellulose has three available hydroxy groups per repeat unit, then the functional group on the *F* moiety will react with the hydroxy groups on the cellulose to bind the core/shell polymer to the cellulose. Since the core/shell binder is associated with the colorant, the colorant is likewise bound to the cellulose. The amine-containing additive apparently serves to catalyze the reaction of the functional group on the *F* moiety with the hydroxy groups on the cellulose.

More precisely, the colorant is trapped in the matrices of the polymer and the polymer in turn is associated with the cellulosic structure of the media. In the absence of amino compounds, the reaction is slow, but still the same sequence of events occur.

### Polymers

Polymers that fall within the scope of the formula (I) include, but are not limited to, the following examples:
(1) (hexyl acrylate)₂₀ (methyl methacrylate)₂₀ (acrylamide)₅₀ (acrolein)₁₀
(2) (styrene)₃₄ (methyl methacrylate)₈ (vinylpyrrolidone)₅₀ (acrolein)₈
(3) (styrene)₂₀ (methyl methacrylate)₂₀ (acrylamide)₅₀ (acrolein)₁₀
(4) (styrene)₂₀ (methyl methacrylate)₂₀ (acrylamine)₅₀ (acrolein dimethyl acetal)₁₀
(5) (hexyl acrylate)₂₀ (methyl methacrylate)₂₀ (poly(ethylene glycol) methyl ether acrylate, mw=404)₆₀ (acrolein)₁₀
(6) (hexyl acrylate)₁₀ (methyl methacrylate)₁₀ (poly(ethylene glycol) methyl ether acrylate, mw=404)₆₀ (acrolein)₂₀
(7) (hexyl acrylate)₂₀ (methyl methacrylate)₂₀ (acrylamide)₅₀ (methacrolein)₁₀
(8) (styrene)₃₄ (methyl methacrylate)₈ (vinyl pyrrolidone)₅₀ (methacrolein)₈
(9) (styrene)₂₀ (methyl methacrylate)₂₀ (arylamide)₅₀ (methacrolein)₁₀
(10) (hexyl acrylate)₂₀ (methyl methacrylate)₂₀ (poly(ethylene glycol) methyl ether acrylate, mw=404)₆₀ (methacrolein)₁₀
(11) (hexyl acrylate)₂₀ (methyl methacrylate)₂₀ (poly(ethylene glycol) methyl ether acrylate, mw=2054)₆₀ (methacrolein)₁₀
(12) (hexyl acrylate)₂₀ (methyl methacrylate)₂₀ (poly(ethylene glycol) methyl ether acrylate, mw=2054)₆₀ (acrolein)₁₀
(13) (hexyl acrylate)₂₀ (methyl methacrylate)₂₀ (poly(ethylene glycol) methyl ether acrylate, mw=2054)₆₀ (acrolein dimethyl acetal)₁₀
(14) (hexyl acrylate)₁₀ (methyl methacrylate)₁₀ (poly(ethylene glycol) methyl ether acrylate, mw=404)₆₀ (methacrolein)₂₀
(15) (lauryl methacrylate)₄₃ (methyl methacrylate)₁₁ (acrylic acid)₂₁ (styrene sulfonate, sodium salt)₂₂ (methacrolein)₃
(16) (lauryl methacrylate)₄₃ (methyl methacrylate)₁₁ (acrylic acid)₂₁ (styrene sulfonate, sodium salt)₂₂ (acrolein)₃.

### INKS

Any of the commonly employed colorants in ink-jet printing technology may be used in the practice of the present invention. While dyes, whether water-insoluble or water-soluble, may be employed, the core/shell binder is preferably employed with pigments.

Without being limited to theory, it is believed that the primer is associated with the colorant in solution and the primer and durable core/shell polymers are encapsulating the colorants upon drying; this appears to be the case after printing the ink on a print medium, such as paper. However, the present invention is meant to include ink formulations which comprise the polymers and colorants without limit to the type of association between the colorant and the polymer.

The following pigments are useful in the practice of the invention; however, this listing is not intended to limit the invention. The following pigments are available from BASF: Paliogen® Orange, Heliogen® Blue L 6901F, Heliogen® Blue NBD 7010, Heliogen® Blue K 7090, Heliogen® Blue L 7101F, Paliogen® Blue L 6470, Heliogen® Green K 8683, and Heliogen® Green L 9140. The following pigments are available from Cabot: Monarch® 1400, Monarch® 1300, Monarch® 1100, Monarch® 1000, Monarch® 900, Monarch® 880, Monarch® 800, Monarch® 700, Cabojet200, Cabojet300, IJX55, and IJX76. The following pigments are available from Ciba-Geigy: Chromophtal® Yellow 3G, Chromophtal® Yellow GR, Chromophtal® Yellow 8G, Igrazin® Yellow 5GT, Igralite® Rubine 4BL, Monastral® Magenta, Monastral® Scarlet, Monastral® Violet R, Monastral® Red B, and Monastral® Violet Maroon B. The following pigments are available from Columbian: Raven 7000, Raven 5750, Raven 5250, Raven 5000, and Raven 3500. The following pigments are available from Degussa: Color Black FW 200, Color Black FW 2, Color Black FW 2V, Color Black FW 1, Color Black FW 18, Color Black S 160, Color Black S 170, Special Black 6, Special Black 5, Special Black 4A, Special Black 4, Printex U, Printex V, Printex 140U, and Printex 140V. The following pigment is available from DuPont: Tipure® R-101. The following pigments are available from Heubach: Dalamar® Yellow YT-858-D and Heucophthal® Blue G XBT-583D. The following pigments are available from Hoechst: Permanent Yellow GR, Permanent Yellow G, Permanent Yellow DHG, Permanent Yellow NCG-71, Permanent Yellow GG, Hansa Yellow RA, Hansa Brilliant Yellow 5GX-02, Hansa Yellow-X, Novoperm® Yellow HR, Novoperm® Yellow FGL, Hansa Brilliant Yellow 10GX, Permanent Yellow G3R-01, Hostaperm® Yellow H4G, Hostaperm® Yellow H3G, Hostaperm® Orange GR, Hostaperm® Scarlet GO, and Permanent Rubine F6B. The following pigments are available from Mobay: Quindo® Magenta, Indofast® Brilliant Scarlet, Quindo® Red R6700, Quindo® Red R6713, and Indofast® Violet. The following pigments are available from Sun Chemical: L74-1357 Yellow, L75-1331 Yellow, L75-2577 Yellow, YGD 9374 Yellow, YHD 9123 Yellow, YCD 9296 Yellow, YFD 1100 Yellow, QHD6040 Magenta, QFD1180 Magenta, RFD3217 Magenta, QFD1146 Magenta, RFD9364 Magenta, QFD 9334 Magenta, BCD6105 Cyan, BCD9448 Cyan, BCD6060 Cyan, BFD5002 Cyan, BFD1121 Cyan, and LHD9303 Black.

Dyes, whether water-soluble or water-insoluble, may be employed in the practice of the present invention, although not as preferred as pigments. Examples of water-soluble dyes include the sulfonate and carboxylate dyes, specifically, those that are commonly employed in ink-jet printing. Specific examples include: Sulforhodamine B (sulfonate), Acid Blue 113 (sulfonate), Acid Blue 29 (sulfonate), Acid Red 4 (sulfonate), Rose Bengal (carboxylate), Acid Yellow 17 (sulfonate), Acid Yellow 29 (sulfonate), Acid Yellow 42 (sulfonate), Acridine Yellow G (sulfonate), Nitro Blue Tetrazolium Chloride Monohydrate or Nitro BT, Rhodamine 6G, Rhodamine 123, Rhodamine B, Rhodamine B Isocyanate, Safranine O, Azure B, Azure B Eosinate, Basic Blue 47, Basic Blue 66, Thioflacin T (Basic Yellow 1), and Auramine O (Basic Yellow 2), all available from Aldrich Chemical Company. Examples of water-insoluble dyes include azo, xanthene, methine, polymethine, and anthroquinone dyes. Specific examples of water-insoluble dyes include Ciba-Geigy Orasol Blue GN, Ciba-Geigy Orasol Pink, and Ciba-Geigy Orasol Yellow.

In the event that one or more surfactants are employed in place of hydrophilic groups on the smear-fast core/shell polymer, the concentration of such surfactant(s) is in the range of about 0.001 to 10 wt%, preferably about 0.01 to 5 wt%, of the ink.

### 1. Additives to Inks to React with Cellulosic Media.

In addition to at least one of the foregoing core/shell polymeric binders, the ink-jet printing inks of the present invention include certain amine-containing additives to the vehicle, which may be characterized as water-soluble and/or water-dispersive amines, polyamines, and amine alcohols. Preferably, amine alcohols are employed in the practice of the present invention.

The amine alcohols have the general formula (II) 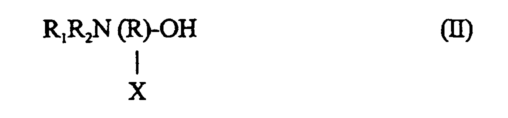 where R₁ and R₂ are independently selected from the group consisting of hydrogen, alkyl, alkoxy, aryl, and phenoxy, R is alkylene, and X is selected from the group consisting of hydrogen, alkyl, aryl, -OH, -COOH, and -CHO. Examples of amine alcohols employed as additives include ethanolamine, dimethylaminopropanol, aminobutanol and derivatives thereof, dipropylaminopropane diol, amino propane diol, 2(2-ethyl-ethoxyamino ethanol), dimethylaminobutanol, 2-(diisopropylamino)ethanol, diisopropanolamine, hydroxyquinone, 3-(2-hydroxyethylamino)-5,5-dimethyl-2-cyclohexene-1-one, 3-(1-hydroxyethyl)aniline, 4-morpholine ethanol, and 3-morpholino-1,2-propanediol.

In the situation in which polymer (I') is employed, X is preferably hydrogen.

Amines without the alcohol group may also be employed in the practice of the present invention, as well as polyamines and polyamino alchohols.

Examples of water-soluble and/or water-dispersive amines, preferably water-soluble amines, include 1, 4-bis(3-aminopropyl) piperazine (Aldrich Cat. # 10,943-6), dimethylamine (Aldrich Cat. # 38,824-6), 1-methylimidazole (Aldrich Cat. # 33,609-2), ethylenediamine (Aldrich Cat. # 39,108-5), piperidine (Aldrich Cat. # 10,409-4), piperazine (Aldrich Cat. # P4,5907), 1-piperidineethanol (Aldrich Cat. # 11,606-8), 2-piperidineethanool (Aldrich Cat. # 43,359-4), 3-piperidinemethanol (Aldrich Cat. # 15,522-3), and 2-piperidinemethanol (Aldrich Cat. # 15,522-5).

An example of a suitable polyamine is oxazoline functional polymer emulsion, available from Nippon Shakubai under the trade designation EPOCROS K1000. Examples of additional polyamines include poly (dimethylamine-co-epichlorohydrin) (Aldrich Cat. # 40,911-1), poly (diallyldimethylammonium chloride) (Aldrich Cat. # 40,902-2), poly ethyleneimine (Aldrich Cat. # 40,871-9), poly ethyleneimine (Aldrich Cat. # 40,870-0), poly ethyleneimine (Aldrich Cat. # 40,872-7), poly ethyleneimine (Aldrich Cat. # 18,197-8), poly ethyleneimine ethoxylated (Aldrich Cat. # 30,618-5 & 42347-5), Jeffamines (emulsion polyamines available from Zeneca), and poly dimethylaminoacrylate (Poly Science).

The above-described amine-containing additives serve to raise pH and control printability of the ink. The concentration of the amine-containing additive is within the range of about 0.005 to 50 wt%, preferably about 0.01 to 10 wt%, of the ink composition.

In the ink compositions of the present invention, the ratio of colorant (pigment) to binder (I) is between 10:1 and 1:10, preferably between 5:1 and 1:5, and most preferably between 3:1 and 1:3.

The general ink formulation comprises:
5 to 50 wt% water-miscible solvent;
0.5 to 10 wt% colorant;
0.1 to 10 wt% at least one core/shell polymeric binder,
0.01 to 10 wt% amine-containing additive; and
water.

The inks of the present invention comprise about 5 to 50 wt%, preferably about 10 to 25 wt%, water-miscible organic co-solvent, about 0.05 to 10 wt%, preferably about 0.5 to 10 wt%, colorant, about 0.0005 to 50 wt%, preferably about 0.1 to 10 wt%, more preferably about 0.5 to 5 wt%, durable core/shell polymer, about 0.0005 to 50 wt%, preferably about 0.1 to 10 wt%, more preferably about 0.5 to 5 wt%, primer core/shell polymer, about 0.01 to 10 wt%, more preferably about 1 to 4 wt%, amine-containing additive, and water.

The co-solvents comprise one or more organic, water-miscible solvents commonly employed in ink-jet printing. Classes of co-solvents employed in the practice of this invention include, but are not limited to, aliphatic alcohols, aromatic alcohols, diols, glycol ethers, poly(glycol) ethers, caprolactams, formamides, acetamides, and long chain alcohols. Examples of compounds employed in the practice of this invention include, but are not limited to, primary aliphatic alcohols of 30 carbons or less, primary aromatic alcohols of 30 carbons or less, secondary aliphatic alcohols of 30 carbons or less, secondary aromatic alcohols of 30 carbons or less, 1,2-alcohols of 30 carbons or less, 1,3-alcohols of 30 carbons or less, 1,ω-alcohols of 30 carbons or less, ethylene glycol alkyl ethers, propylene glycol alkyl ethers, poly(ethylene glycol) alkyl ethers, higher homologs of poly(ethylene glycol) alkyl ethers, poly(propylene glycol) alkyl ethers, higher homologs of poly(propylene glycol) alkyl ethers, N-alkyl caprolactams, unsubstituted caprolactams, substituted formamides, unsubstituted formamides, substituted acetamides, and unsubstituted acetamides. Specific examples of co-solvents that are preferably employed in the practice of this invention include, but are not limited to, N-methyl pyrrolidone, 1,5-pentanediol, 2-pyrrolidone, diethylene glycol, 1,3-(2-methyl)-propanediol, 1,3,5-(2-methyl)-pentanetriol, tetramethylene sulfone, 3-methoxy-3-methylbutanol, glycerol, 1,2-alkyldiols, propylene glycol, glycerol, hexanediol, and heptanediol.

The balance of the ink is water, together with other additives commonly added to ink-jet inks, which are employed to optimize the properties of the ink for specific applications. For example, as is well-known to those skilled in the art, biocides may be used in the ink composition to inhibit growth of microorganisms, sequestering agents such as EDTA may be included to eliminate deleterious effects of heavy metal impurities, and buffer solutions may be used to control the pH of the ink. Other known additives such as viscosity modifiers and other acrylic or non-acrylic polymers may be added to improve various properties of the ink compositions as desired.

It should be noted that the use of the additives disclosed herein without the polymer (I) or (I') do not provide inks with good ink permanence, including water-fastness and smear-fastness. That is, it is the combination of the additives of the present invention and the core/shell polymers that provides the ink with good ink permanence.

The formulations of the primer and durable core/shell polymers employ the same components as the above-described core/shell polymers, but with different concentrations, as shown in Table I below.

**Table I. Latex Polymer Formulations**

| Component | Primer Latex Polymer, wt% | Durable Latex Polymer, wt% |
|---|---|---|
| A | 10-90 | 0-90 |
| B | 10-90 | 0-90 |
| C | 0-60 | 0-90 |
| D | 0-50 | - |
| E | 0-40 | 0.01-100 |
| F | 1-30 | 1-30 |

The ink-jet ink printing compositions of the present invention evidence superior smearfastness, as compared to prior art ink-jet ink compositions.

### EXAMPLES

In the following examples, most of the monomers used were commercially available. The purity of such monomers is that found in normal commercial practice. Only the poly(ethylene glycol) methyl ether acrylate monomers of different molecular weights were prepared from the corresponding alcohol with acryloyl chloride in the presence of triethylamine by standard esterification process. Other monomers can be prepared by following conventional and well-lrnown procedures of typical organic reactions.

### Example 1. (Hexyl Acrylate)₂₀ (Methyl Methacrylate)₂₀ (Poly(Ethylene Glycol) Methyl Ether Acrylate, mw=2054)₆₀ (Acrolein)₁₀.

Hexyl acrylate (3 g), MMA (3 g), PEGAc(2054) (9 g), and acrolein (1.5 g) were mixed in water (14 g). To this mixture, BRIJ 92 (0.45 g), Aerosol DPOS45 (0.8 g) and isooctylmercaptopropionate (0.1 g) were added to form an emulsion. The emulsion was added to water (128.75 g) containing ammonium persulfate (0.26 g) at 75°C. The reaction mixture was maintained at that temperature for 2.5 hour and then cooled to obtain the title core/shell polymer with 10% solid concentration.

### Example 2. (Hexyl Acrylate)₂₀ (Methyl Methacrylate)₂₀ (PEG-Ac-2054)₃₀ (Acrolein Dimethyl Acetal)₁₀.

Hexyl acrylate (2 g), MMA (2 g), poly(ethylene glycol) methyl ether acrylate, mw=2054) (6 g), and acrolein dimethyl acetal (1 g) were mixed in water (9 g) containing BRIJ 92 (0.3 g) to form an emulsion. The emulsion was added to degassed water (84.6 g) containing ammonium persulfate (0.17 g) at 75°C. The reaction mixture was maintained at that temperature for 2 hours and then cooled to obtain the title core/shell polymer with 10% solid concentration.

Inks containing both the *F* moiety on the core/shell binder and the amine-containing additive of the invention evidence superior printing properties as compared to inks that do not contain the foregoing two components of the present invention. Specifically, kogation is reduced and smear-fastness and water-fastness are considerably improved, as are optical density and decel.

Thus, there has been disclosed ink-jet ink printing compositions having superior smearfastness. It will be appreciated by those skilled in the art that various changes and modifications of an obvious nature may be made, and all such changes and modifications are considered to fall within the scope of the invention.

## Claims

1. An ink-jet printing ink composition comprising a vehicle and a colorant, wherein said composition further includes at least one latex polymeric binder to increase smearfastness of said composition and an amine-containing additive to said vehicle, said latex polymeric binder having a formula given by
[(A)ₘ(B)ₙ(C)ₚ(D)_{q}(E)ᵣ(F)ₛ]ₓ
wherein A, B, C, D, E, and F are moieties as follows:
A = at least one hydrophobic component contributing to improved durable, film-forming properties selected from moieties which, when homopolymerized to a solid state, have a glass transition temperature (T_{g}) in the range between -150° and +25° C, wherein said A monomer moiety is
C(R₁)(R₂)=C(R₃)R₄R₅,
where
R₁ and R₂ are independently hydrogen, halogen, alkyl, aryl, or substituted alkyl or aryl, or vinyl butyral,
R₃ is hydrogen, halogen, saturated or unsaturated alkyl, alkoxy, aryl, or substituted alkyl, alkoxy, or aryl,
R₄ is direct bond, O, CO, NH, halogen, saturated or unsaturated alkyl, aryl, or substituted alkyl, aryl, or CN,
R₅ is absent (if R₄ is alkyl, aryl, or substituted alkyl or aryl), direct bond, hydrogen, NH, O, alkyl, alkylene, aryl, or substituted alkyl, alkylene, or aryl, and
R₆ is absent (if R₄ is alkyl, aryl, or substituted alkyl or aryl or if R₅ is hydrogen, alkyl, aryl, or substituted alkyl or aryl), NH₂, saturated or unsaturated alkyl, alkoxy, aryl, aroxy, or substituted alkyl, or aryl, and where said alkyl, alkylene, aryl, alkoxy, and aroxy each contain more than 1 carbon atom and less than 40 carbon atoms;
B = at least one hydrophobic and solvent barrier moiety used to adjust the T_{g} of the hydrophobic component of said polymer which, when homopolymerized to a solid state, has a T_{g} greater than 25° C, wherein said B monomer moiety is
CR₁R₂=C(R₃)R₄R₅R₆
where
R₁ and R₂ are independently selected from hydrogen, halogen, and vinyl butyral,
R₃ is hydrogen, halogen, alkyl, alkoxy, alkylene, aryl, or substituted alkyl, alkoxy, alkylene, or aryl,
R₄ is direct bond, O, CO, N, NO₂, halogen, alkyl, alkylene, aryl, or substituted alkyl, alkylene, aryl,
R₅ is hydrogen, N, O alkyl, alkylene, aryl, or substituted alkyl, alkylene, or aryl, and
R₆ is alkyl, alkoxy, alkylene, aryl, aroxy, or substituted alkyl, alkylene, or aryl, and where said alkyl, alkylene, aryl, alkoxy, and aroxy each contain from 1 to 40 carbon atoms, where R₁ and R₂ and R₂ and R₃ can each form a ring, and where R₄ and R₅ can form a ring through nitrogen or oxygen;
C = at least one hydrophilic component comprising a water-soluble monomer; wherein said C monomer moiety is selected from the group consisting of
(a) 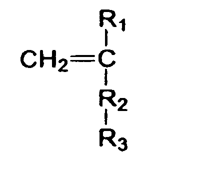 where
R₁ = H, halogen, alkyl, aryl, or substituted alkyl or aryl;
R₂ = direct bond, O, CO, NH, or CONH;
R₃ = OH, (CH₂CH₂O)_{y}R₄, (CH₂CH(CH₃)O)_{y}R₄, or (CH₂CH(C₂H₅)O)_{y}R₄, SH, (CH₂CH₂S)_{y}R₄, (CH₂CH(CH₃)S)_{y}R₄, or (CH₂CH(C₂H₅)S)_{y}R₄;
y = 1 to 200; and
R₄ = alkyl, aryl, substituted alkyl or aryl;
(b) 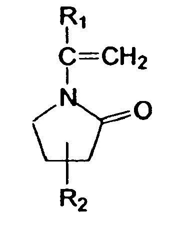
where R₁ and R₂ are independently selected from H, halogen, alkyl, aryl, and substituted alkyl and aryl, where said alkyl and aryl each contain from 2 to 40 carbon atoms;
(c) 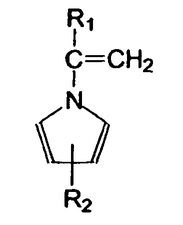
where R₁ and R₂ are independently selected from H, halogen, alkyl, aryl, and substituted alkyl and aryl;
(d) 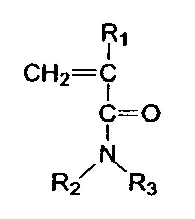 where
R₁ = H; halogen, alkyl, aryl or substituted alkyl or aryl; and
R₂ and R₃ are either independently selected from alkyl, aryl, and substituted alkyl and aryl or can form either an aliphatic ring or an aromatic ring;
D = at least one UV absorber;
E = at least one moiety having at least one highly polar functional group;
F = a moiety having at least one aldehyde functional group;
m = 10 to 90 wt%;
n = 10 to 90 wt;
p = 0 to 60 wt%;
q = 0 to 50 wt%;
r = 0 to 40 wt%;
s = 1 to 30 wt%;
m + n + p + q + r + s = 100 wt%; and
x = 1 to 100,000,
wherein said polymer has either hydrophobic and hydrophilic moieties or has only hydrophobic moieties and is associated with said surfactant to form a polymer/surfactant system, said polymer or polymer/surfactant system capable of forming a film from water, which, upon dehydration, is essentially resistant to water, said polymer having a T_{g} within the range of -10° to +110° C, said amine-containing additive consisting essentially of a water-soluble or water-dispersible amine, polyamine, or amine alcohol, said amine alcohol having a formula given by 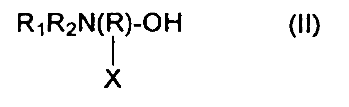
where R₁ and R₂ are independently selected from the group consisting of hydrogen, alkyl, alkoxy, aryl, and phenoxy, R is alkylene, X is hydrogen, alkyl, aryl, -OH, -COOH, and - CHO; with the proviso that at least one of the moieties C and E are present in the polymer.

2. The ink-jet ink of Claim 1 wherein said polymeric binder has a formula given by
[(A)ₘ(B)ₙ(C')ₚ(F)ₛ]ₓ
wherein
A = at least one hydrophobic component contributing to improved durable, film-forming properties selected from moieties which, when homopolymerized to a solid state, have a glass transition temperature (T_{g}) less than 25° C;
B = at least one hydrophobic and solvent barrier moiety used to adjust the T_{g} of the hydrophobic component of said polymer which, when homopolymerized to a solid state, has a T_{g} greater than 25° C;
C' = at least one hydrophilic component comprising a water-soluble monomer that is either ionic or non-ionic;
F = at least one moiety having an aldehyde functional group;
m < 30 wt%;
n > 40 wt%;
p < 30 wt%; and
s < 30 wt%,
and wherein in said amine alcohol, X is hydrogen.

3. The ink-jet ink of Claim 1 wherein said D moiety is selected from the group consisting of 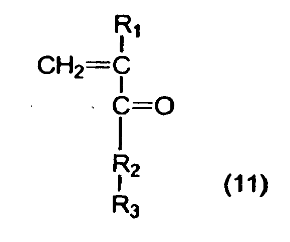
R₁ = H, alkyl, aryl, substituted alkyl or alkyl
R₂=O or NH
R₃ =

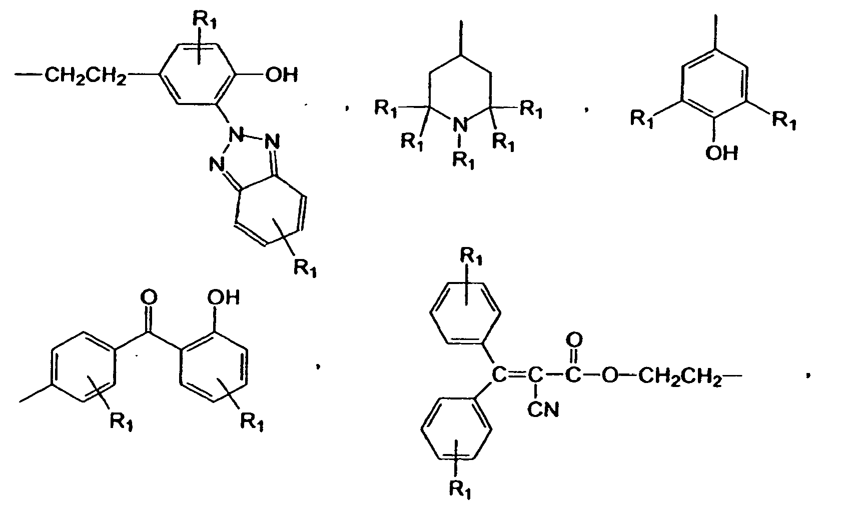

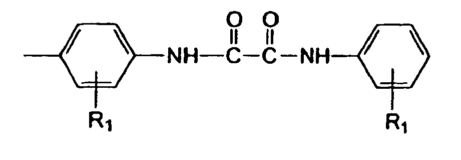

4. The ink-jet ink of Claim 1 wherein said E moiety is selected from the group consisting of
(a)
CH(R₁)=C(R₂)R₃COOH
where
R₁ = H, COOH, COOR₄;
R₂ = H, halogen, alkyl, aryl, alkoxyl, substituted alkyl, aryl or alkoxyl;
R₃ = direct bond, alkylene, arylene, or sustituted alkylene or arylene; and
R₄ = alkyl, aryl, or substituted alkyl or aryl;
(b)
CH₂=CHR₁NR₂R₃
where
R₁ = alkylene, arylene, substituted alkylene or arylene, or SO₂; and
R₂ and R₃ are either independently selected from H, alkyl, aryl, and substituted alkyl, aryl and alkoxyl or form either an aliphatic or aromatic ring;
(c)
y (CH₂=CHR₁COO⁻) M^{y+}
where
R₁ = alkylene, arylene, substituted alkylene or arylene;
y = 1 to 4; and
M^{y+} = NH₄⁺, Li⁺, Na⁺, K⁺, Ca²⁺ Mg²⁺, Al³⁺, Ti⁴⁺ ,triethylammonium, diethylammonium, and pyrridinium;
(d)
z (CH₂=CHR₁N⁺ R₂R₃R₄) X^{z-}
where
R₁ = alkylene, arylene, substituted alkylene or arylene, COO, or cyclic ring containing nitrogen;
R₂, R₃ and R₄ are independently selected from H, alkyl, aryl, alkoxyl, and substituted alkyl, aryl and alkoxyl;
z = 1 to 4; and
X = halogen, BF₄, PF₆, ClO₄, SCN, CNO, CNS;
(e) 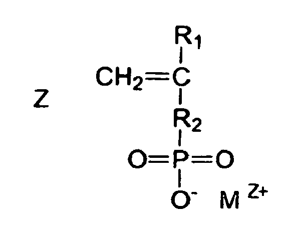 where
R₁ = H, alkyl, aryl, alkoxyl, substituted alkyl, aryl or alkoxyl;
R₂ = direct bond, alkylene, arylene, or substituted alkylene or arylene;
z = 1 to 4; and
M^{z+} = NH₄⁺, Li⁺, Na⁺, K⁺, Ca²⁺, Mg²⁺, Al³⁺, Ti⁴⁺, triethylammonium, diethylammonium, and pyrridinium;
(f) 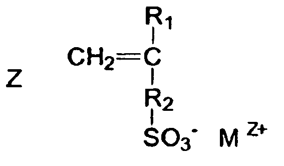 where
R₁ = H, alkyl, aryl, alkoxyl, or substituted alkyl, aryl or alkoxyl;
R₂ = direct bond, COOR₃, arylene, alkylene, or -CONHR₃;
R₃ = alkylene, arylene, or substituted alkylene or arylene, or fluoroalkylene;
z = 1 to 4; and
M^{z+} = NH₄⁺, Li⁺, Na⁺, K⁺, Ca²⁺, Mg²⁺, Al³⁺, Ti⁴⁺;
(g) 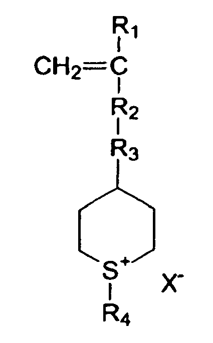 where
R₁ = -H, halogen, alkyl, or aryl;
R₂ = >CO, -O-;
R₃ = direct bond, >NH;
R₄ = alkyl or aryl; and
X = Cl, Br, BF₄, ClO₄, I, or NO₃;
(h) 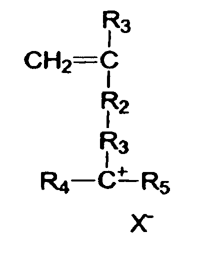 where
R₁ = -H, halogen, alkyl, or aryl; R₂ =>CO, -O-;
R₃ = direct bond, >NH, alkylene, or arylene;
R₄ and R₅ are independently selected from alkyl or aryl; and
X = SbF₅⁻, FSO₃⁻;
(i) 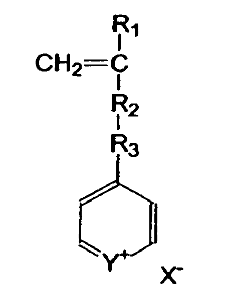 where
Y = O or S;
R₁ = -H, halogen, alkyl, or aryl;
R₂ = >CO, -O-;
R₃ = direct bond, >NH, alkylene, or arylene;
X = Cl, Br, I, ClO₄, BF₄; and
(j) a tetrazolium salt.

5. The ink-jet ink of Claim 1 wherein said F moiety is acrolein.

6. The ink-jet ink of Claim I wherein said polymer is selected from the group consisting of (hexyl acrylate)₂₀ (methyl methacrylate)₂₀ (acrylamide)₅₀ (acrolein)₁₀; (styrene)₃₄ (methyl methacrylate)₈ (vinylpyrrolidone)₅₀ (acrolein)₈; (styrene)₂₀ (methyl methacrylate)₂₀ (acrylamide)₅₀ (acrolein)₁₀; (hexyl acrylate)₂₀ (methyl methacrylate)₂₀ (poly(ethylene glycol) methyl ether acrylate, mw=404)₆₀ (acrolein)₁₀; (hexyl acrylate)₁₀ (methyl methacrylate)₁₀ (poly(ethylene glycol) methyl ether acrylate, mw=404)₆₀ (acrolein)₂₀; (hexyl acrylate)₂₀ (methyl methacrylate)₂₀ (acrylamide)₅₀ (methacrolein)₁₀; (styrene)₃₄ (methyl methacrylate)₈ (vinyl pyrrolidone)₅₀ (methacrolein)₈; (styrene)₂₀ (methyl methacrylate)₂₀ (arylamide)₅₀ (methacrolein)₁₀; (hexyl acrylate)₂₀ (methyl methacrylate)₂₀ (poly(ethylene glycol) methyl ether acrylate, mw=404)₆₀ (methacrolein)₁₀; (hexyl acrylate)₂₀ (methyl methacrylate)₂₀ (poly(ethylene glycol) methyl ether acrylate, mw=2054)₆₀ (methacrolein)₁₀; (hexyl acrylate)₂₀ (methyl methacrylate)₂₀ (poly(ethylene glycol) methyl ether acrylate, mw=2054)₆₀ (acrolein)₁₀; (hexyl acrylate)₁₀, (methyl methacrylate)₁₀ (poly(ethylene glycol) methyl ether acrylate, mw=404)₆₀ (methacrolein)₂₀; (lauryl methacrylate)₄₃ (methyl methacrylate)₁₁ (acrylic acid)₂₁ (styrene sulfonate, sodium salt)₂₂ (methacrolein)₃; (lauryl methacrylate)₄₃ (methyl methacrylate)₁₁ (acrylic acid)₂₁ (styrene sulfonate, sodium salt)₂₂ (acrolein)₃.

7. The ink-jet ink of Claim 1 wherein said amine alcohol is selected from the group consisting of ethanolamine, dimethylaminopropanol, aminobutanol and derivatives thereof, dipropylaminopropane diol, amino propane diol, 2(2-ethyl-ethoxyamino ethanol), dimethylaminobutanol, 2-(diisopropylamino)ethanol, diisopropanolamine, hydroxyquinone, 3-(2-hydroxyethylamino)-5,5-dimethyl-2-cyclohexene-1-one, 3-(1-hydroxyethyl)aniline, 4-morpholineethanol, and 3-morpholino-1,2-propanediol, wherein said amine is selected from the group consisting of 1, 4-bis(3-aminopropyl) piperazine, dimethylamine, 1-methylimidazole, ethylenediamine, piperidine, piperazine, 1-piperidineethanol, 2-piperidineethanol, 3-piperidinemethanol, and 2-piperidinemethanol, and wherein said polyamine is selected from the group consisting of poly (dimethylamine-co-epichlorohydrin), poly (diallyldimethylammonium chloride), poly ethyleneimine, poly ethyleneimine ethoxylated, and poly dimethylaminoacrylate.

8. The ink-jet ink of Claim 1 wherein said colorant and said latex polymeric binder are present in a ratio within a range of 10:1 to 1:10.

9. The ink-jet ink of Claim 1 wherein said additive is present in said ink within a range of 0.005 to 50 wt%.

10. The ink-jet ink of Claim 1 wherein said ink comprises:
5 to 50 wt% water-miscible solvent;
0.5 to 10 wt% colorant;
0.1 to 10 wt% at least one said latex polymeric binder;
0.01 to 10 wt% at least one said amine-containing additive; and
water.

## Patentansprüche

1. Eine Tintenstrahldrucktintenzusammensetzung, die ein Trägermittel und ein Farbmittel aufweist, wobei die Zusammensetzung ferner zumindest ein polymeres Latexbindemittel, um die Schmierechtheit der Zusammensetzung zu erhöhen, und einen Amin enthaltenden Zusatzstoff zu dem Trägermittel umfasst, wobei das polymere Latexbindemittel eine Formel aufweist, die durch
[(A)ₘ(B)ₙ(C)ₚ(D)_{q}(E)ᵣ(F)ₛ]ₓ
gegeben ist, wobei A, B, C, D, E und F folgende Anteile sind:
A = zumindest eine hydrophobe Komponente, die zu verbesserten dauerhaften Filmbildungseigenschaften beiträgt und die aus Anteilen ausgewählt ist, die, wenn sie zu einem Festkörperzustand homopolymerisiert sind, eine Glasübergangstemperatur (T_{g}) im Bereich zwischen -150° und +25°C aufweisen, wobei der A-Monomer-Anteil
C (R₁) (R₂) = C (R₃) R₄R₅
ist,
wobei R₁ und R₂ unabhängig voneinander Wasserstoff, Halogen, Alkyl, Aryl oder substituiertes Alkyl oder Aryl oder Vinylbutyral sind,
R₃ Wasserstoff, Halogen, gesättigtes oder ungesättigtes Alkyl, Alkoxy, Aryl oder substituiertes Alkyl, Alkoxy oder Aryl ist,
R₄ eine Direktbindung, O, CO, NH, Halogen, gesättigtes oder ungesättigtes Alkyl, Aryl oder substituiertes Alkyl, Aryl oder CN ist,
R₅ nicht vorhanden ist (falls R₄ Alkyl, Aryl oder substituiertes Alkyl oder Aryl ist), Direktbindung, Wasserstoff, NH, O, Alkyl, Alkylen, Aryl oder substituiertes Alkyl, Alkylen oder Aryl ist, und
R₆ nicht vorhanden ist (falls R₄ Alkyl, Aryl oder substituiertes Alkyl oder Aryl ist oder falls R₅ Wasserstoff, Alkyl, Aryl oder substituiertes Alkyl oder Aryl ist), NH₂, gesättigtes oder ungesättigtes Alkyl, Alkoxy, Aryl, Aroxy oder substituiertes Alkyl oder Aryl ist, und wobei das Alkyl, Alkylen, Aryl, Alkoxy und Aroxy jeweils mehr als 1 Kohlenstoffatom und weniger als 40 Kohlenstoffatome enthalten;
B = zumindest ein hydrophober und Lösungsmittelbarriereanteil, der dazu verwendet wird, die T_{g} der hydrophoben Komponente des Polymers einzustellen, und der, wenn er zu einem Festkörperzustand homopolymerisiert ist, eine T_{g} von mehr als 25°C aufweist, wobei der B-Monomer-Anteil
CR₁R₂ = C(R₃)R₄R₅R₆
ist,
wobei R₁ und R₂ unabhängig voneinander aus Wasserstoff, Halogen und Vinylbutyral ausgewählt sind,
R₃ Wasserstoff, Halogen, Alkyl, Alkoxy, Alkylen, Aryl oder substituiertes Alkyl, Alkoxy, Alkylen oder Aryl ist,
R₄ Direktbindung, O, CO, N, NO₂, Halogen, Alkyl, Alkylen, Aryl oder substituiertes Alkyl, Alkylen, Aryl ist,
R₅ Wasserstoff, N, O, Alkyl, Alkylen, Aryl oder substituiertes Alkyl, Alkylen oder Aryl ist, und
R₆ Alkyl, Alkoxy, Alkylen, Aryl, Aroxy oder substituiertes Alkyl, Alkylen oder Aryl ist, und wobei das Alkyl, Alkylen, Aryl, Alkoxy und Aroxy jeweils von 1 bis 40 Kohlenstoffatome enthalten, wobei R₁ und R₂ und R₂ und R₃ jeweils einen Ring bilden können, und wobei R₄ und R₅ einen Ring durch Stickstoff oder Sauerstoff bilden können;
C = zumindest eine hydrophile Komponente, die ein wasserlösliches Monomer aufweist;
wobei der C-Monomer-Anteil aus der Gruppe ausgewählt ist, die aus Folgendem besteht:
(a) 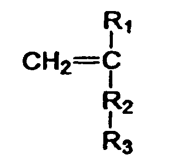
wobei
R₁ = H, Halogen, Alkyl, Aryl oder substituiertes Alkyl oder Aryl;
R₂ = Direktbindung , O, CO, NH oder CONH;
R₃ = OH, (CH₂CH₂O)_{y}R₄, (CH₂CH (CH₃)O)_{y}R₄ oder (CH₂CH (C₂H₅)O) _{y}R₄, SH, (CH₂CH₂S)_{y}R₄, (CH₂CH (CH₃) S) _{y}R₄ oder (CH₂CH (C₂H₅) S) _{y}R₄;
y = 1 bis 200; und
R₄ = Alkyl, Aryl, substituiertes Alkyl oder Aryl;
(b) 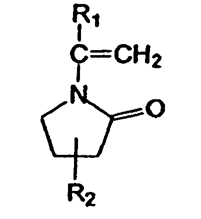
wobei R₁ und R₂ unabhängig voneinander aus H, Halogen, Alkyl, Aryl und substituiertem Alkyl und Aryl ausgewählt sind, wobei das Alkyl und Aryl jeweils von 2 bis 40 Kohlenstoffatome enthalten;
(c) 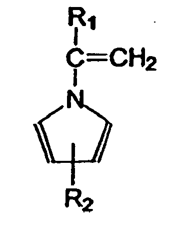
wobei R₁ und R₂ unabhängig voneinander aus H, Halogen, Alkyl, Aryl und substituiertem Alkyl und Aryl ausgewählt sind;
(d) 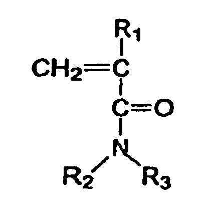
wobei R₁ = H; Halogen, Alkyl, Aryl oder substituiertes Alkyl oder Aryl; und
R₂ und R₃ entweder unabhängig voneinander aus Alkyl, Aryl und substituiertem Alkyl und Aryl ausgewählt sind oder entweder einen aliphatischen Ring oder einen aromatischen Ring bilden können;
D = zumindest ein UV-Absorber;
E = zumindest ein Anteil, der zumindest eine stark polare funktionelle Gruppe aufweist;
F = ein Anteil, der zumindest eine funktionelle Aldehydgruppe aufweist;
m = 10 bis 90 Gew.-%;
n = 10 bis 90 Gew.-%;
p = 0 bis 60 Gew.-%;
q = 0 bis 50 Gew.-%;
r = 0 bis 40 Gew.-%;
s = 1 bis 30 Gew.-%;
m + n + p + q + r + s = 100 Gew.-%; und
x = 1 bis 100.000,
wobei das Polymer entweder hydrophobe oder hydrophile Anteile aufweist oder lediglich hydrophobe Anteile aufweist und dem Tensid zugeordnet ist, um ein Polymer/Tensid-System zu bilden, wobei das Polymer oder das Polymer/Tensid-System in der Lage sind, aus Wasser einen Film zu bilden, der auf eine Dehydrierung hin im Wesentlichen wasserbeständig ist, wobei das Polymer eine T_{g} im Bereich von -10° bis +110°C aufweist, wobei der Amin enthaltende Zusatzstoff im Wesentlichen aus einem wasserlöslichen oder einem in Wasser dispergierbaren Amin, Polyamin oder Aminalkohol besteht, wobei der Aminalkohol eine Formel aufweist, die durch 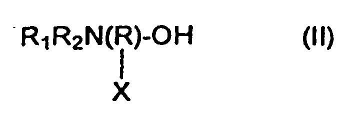
gegeben ist,
wobei R₁ und R₂ unabhängig voneinander aus der Gruppe ausgewählt sind, die aus Wasserstoff, Alkyl, Alkoxy, Aryl und Phenoxy besteht, R Alkylen ist, X Wasserstoff, Alkyl, Aryl, -OH, -COOH und -CHO ist; mit der Maßgabe, dass zumindest einer der Anteile C und E in dem Polymer vorliegt.

2. Die Tintenstrahltinte gemäß Anspruch 1, bei der das polymere Bindemittel eine Formel aufweist, die durch
[(A)ₘ(B)ₙ(C')ₚ(F)ₛ]ₓ
gegeben ist, wobei
A = zumindest eine hydrophobe Komponente, die zu verbesserten dauerhaften Filmbildungseigenschaften beiträgt und die aus Anteilen ausgewählt ist, die, wenn sie zu einem Festkörperzustand homopolymerisiert sind, eine Glasübergangstemperatur (T_{g}) von weniger als 25° aufweisen;
B = zumindest ein hydrophober und Lösungsmittelbarriereanteil, der dazu verwendet wird, die T_{g} der hydrophoben Komponente des Polymers einzustellen, und der, wenn er zu einem Festkörperzustand homopolymerisiert ist, eine T_{g} von mehr als 25°C aufweist;
C' = zumindest eine hydrophile Komponente, die ein wasserlösliches Monomer aufweist, das entweder ionisch oder nicht-ionisch ist;
F = zumindest ein Anteil, der eine funktionelle Aldehydgruppe aufweist;
m < 30 Gew.-%;
n > 40 Gew.-%;
P < 30 Gew.-%; und
s < 30 Gew.-%,
und wobei bei dem Aminalkohol X Wasserstoff ist.

3. Die Tintenstrahltinte gemäß Anspruch 1, bei der der D-Anteil aus der Gruppe ausgewählt ist, die aus 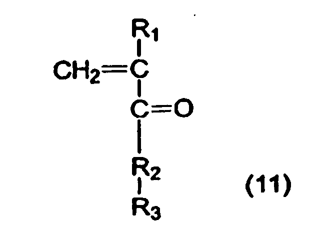
besteht,
R₁ = H, Alkyl, Aryl, substituiertes Alkyl oder Aryl
R₂ = O oder NH
R₃ =

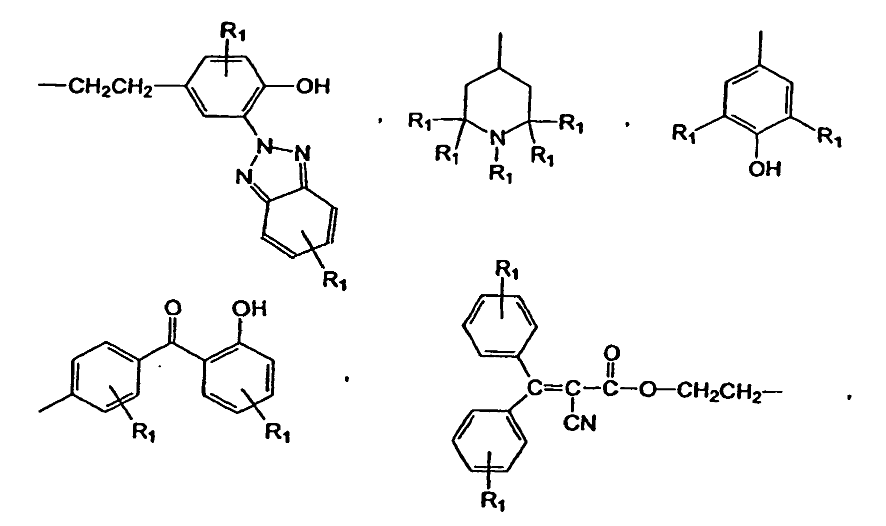

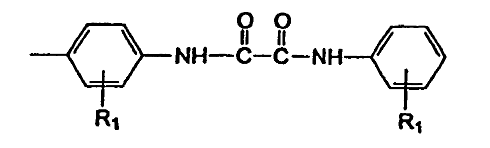

4. Die Tintenstrahltinte gemäß Anspruch 1, bei der der E-Anteil aus der Gruppe ausgewählt ist, die aus folgenden besteht:
(a)
CH (R₁) = C(R₂)R₃COOH
wobei
R₁ = H, COOH, COOR₄;
R₂ = H, Halogen, Alkyl, Aryl, Alkoxyl, substituiertes Alkyl, Aryl oder Alkoxyl;
R₃ = Direktbindung, Alkylen, Arylen oder substituiertes Alkylen oder Arylen; und
R₄ = Alkyl, Aryl oder substituiertes Alkyl oder Aryl;
(b)
CH₂ = CHR₁NR₂R₃
wobei
R₁ = Alkylen, Arylen, substituiertes Alkylen oder Arylen oder SO₂; und
R₂ und R₃ entweder unabhängig voneinander aus H, Alkyl, Aryl und substituiertem Alkyl, Aryl und Alkoxyl ausgewählt sind oder entweder einen aliphatischen oder einen aromatischen Ring bilden;
(c)
y(CH₂ = CHR₁COO⁻)M^{y+}
wobei
R₁ = Alkylen, Arylen, substituiertes Alkylen oder Arylen;
y = 1 bis 4; und
M^{y+} = NH₄⁺, Li⁺, Na⁺, K⁺, Ca²⁺, Mg²⁺, Al³⁺, Ti⁴⁺, Triethylammonium, Diethylammonium und Pyrridinium;
(d)
z (CH₂ = CHR₁N⁺R₂R₃R₄) X^{z-}
wobei
R₁ = Alkylen, Arylen, substituiertes Alkylen oder Arylen, COO oder ein zyklischer Ring, der Stickstoff enthält;
R₂, R₃ und R₄ unabhängig voneinander aus H, Alkyl, Aryl, Alkoxy und substituiertem Alkyl, Aryl und Alkoxyl ausgewählt sind;
z = 1 bis 4; und
X = Halogen, BF₄, PF₆, ClO₄, SCN, CNO, CNS;
(e) 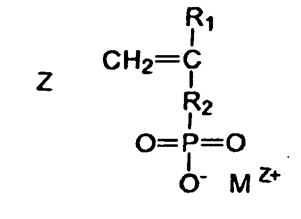
wobei
R₁ = H, Alkyl, Aryl, Alkoxyl, substituiertes Alkyl, Aryl oder Alkoxyl;
R₂ = Direktbindung, Alkylen, Arylen oder substituiertes Alkylen oder Arylen;
z = 1 bis 4; und
M^{z+} = NH₄⁺, Li⁺, Na⁺, K⁺, Ca²⁺, Mg²⁺, Al³⁺, Ti⁴⁺, Triethylammonium, Diethylammonium und Pyrridinium;
(f) 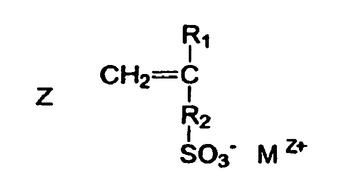
wobei
R₁ = H, Alkyl, Aryl, Alkoxyl oder substituiertes Alkyl, Aryl oder Alkoxyl;
R₂ = Direktbindung, COOR₃, Arylen, Alkylen oder -CONHR₃;
R₃ = Alkylen, Arylen oder substituiertes Alkylen oder Arylen oder Fluoralkylen;
z = 1 bis 4; und
M^{z+} = NH₄⁺, Li⁺, Na⁺, K⁺, Ca²⁺, Mg²⁺, Al³⁺, Ti⁴⁺;
(g) 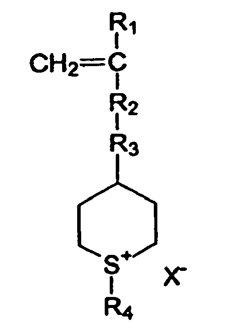
wobei
R₁ = -H, Halogen, Alkyl oder Aryl;
R₂ = >CO, -O-;
R₃ = Direktbindung, >NH;
R₄ = Alkyl oder Aryl; und
X = Cl, Br, BF₄, ClO₄, I oder NO₃;
(h) 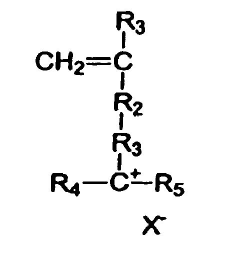
wobei
R₁ = -H, Halogen, Alkyl oder Aryl;
R₂ = > CO, -O-;
R₃ = Direktbindung, > NH, Alkylen oder Arylen;
R₄ und R₅ unabhängig voneinander aus Alkyl oder Aryl ausgewählt sind; und
X = SbF₅⁻, FSO₃⁻;
(i) 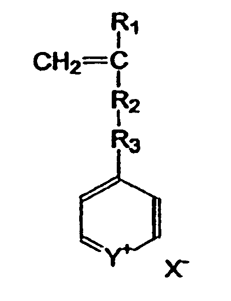
wobei Y = O oder S;
R₁ = -H, Halogen, Alkyl oder Aryl;
R₂ = > CO, -O-;
R₃ = Direktbindung, > NH, Alkylen oder Arylen;
X = Cl, Br, I, ClO₄, BF₄; und
(j) ein Tetrazoliumsalz.

5. Die Tintenstrahltinte gemäß Anspruch 1, bei der der F-Anteil Acrolein ist.

6. Die Tintenstrahltinte gemäß Anspruch 1, bei der das Polymer aus der Gruppe ausgewählt ist, die aus Folgenden besteht: (Hexylacrylat)₂₀ (Methylmethacrylat)₂₀ (Acrylamid)₅₀ (Acrolein)₁₀; (Styren)₃₄ (Methylmethacrylat)₈ (Vinylpyrrolidon)₅₀ (Acrolein)₈; (Styren)₂₀ (Methylmethacrylat)₂₀ (Acrylamid)₅₀ (Acrolein)₁₀; (Hexylacrylat)₂₀ (Methylmethacrylat)₂₀ (Poly(Ethylenglycol) Methyletheracrylat, rel. MM = 404)₆₀ (Acrolein)₁₀; (Hexylacrylat)₁₀ (Methylmethacrylat)₁₀ (Poly(Ethylenglycol) Methyletheracrylat, rel. MM = 404)₆₀ (Acrolein)₂₀; (Hexylacrylat)₂₀ (Methylmethacrylat)₂₀ (Acrylamid)₅₀ (Methacrolein)₁₀; (Styren)₃₄ (Methylmethacrylat)₈ (Vinylpyrrolidon)₅₀ (Methacrolein)₈; (Styren)₂₀ (Methylmethacrylat)₂₀ (Arylamid)₅₀ (Methacrolein)₁₀; (Hexylacrylat)₂₀ (Methylmethacrylat)₂₀ (Poly(Ethylenglycol) Methyletheracrylat, rel. MM = 404)₆₀ (Methacrolein)₁₀; (Hexylacrylat)₂₀ (Methylmethacrylat)₂₀ (Poly(Ethylenglycol) Methyletheracrylat, rel. MM = 2.054)₆₀ (Methacrolein)₁₀; (Hexylacrylat)₂₀ (Methylmethacrylat)₂₀ (Poly(Ethylenglycol) Methyletheracrylat, rel. MM = 2.054)₆₀ (Acrolein)₁₀; (Hexylacrylat)₂₀ (Methylmethacrylat)₁₀ (Poly(Ethylenglycol) Methyletheracrylat, rel. MM = 404)₆₀ (Methacrolein)₂₀; (Laurylmethacrylat)₄₃ (Methylmethacrylat)₁₁ (Acrylsäure)₂₁ (Styrensulfonat, Natriumsalz)₂₂ (Methacrolein)₃; (Laurylmethacrylat)₄₃ (Methylmethacrylat)₁₁ (Acrylsäure)₂₁ (Styrensulfonat, Natriumsalz)₂₂ (Acrolein)₃.

7. Die Tintenstrahltinte gemäß Anspruch 1, bei der der Aminalkohol aus der Gruppe ausgewählt ist, die aus Folgenden besteht: Ethanolamin, Dimethylaminopropanol, Aminobutanol und Derivaten derselben, Dipropylaminopropandiol, Aminopropandiol, 2(2-Ethylethoxyaminoethanol), Dimethylaminobutanol, 2-(Diisopropylamino)ethanol, Diisopropanolamin, Hydroxychinon, 3-(2-Hydroxyethylamino)-5,5-dimethyl-2-cyclohexen-1-on, 3-(1-Hydroxyethyl)anilin, 4-Morpholinethanol und 3-Morpholino-1,2-propandiol, wobei das Amin aus der Gruppe ausgewählt ist, die aus 1, 4-bis(3-Aminopropyl)piperazin, Dimethylamin, 1-Methylimidazol, Ethylendiamin, Piperidin, Piperazin, 1-Piperidinethanol, 2-Piperidinethanol, 3-Piperidinmethanol und 2-Piperidinmethanol besteht, und wobei das Polyamin aus der Gruppe ausgewählt ist, die aus Poly(Dimethylamin-co-Epichlorhydrin), Poly(Diallyl-dimethylammoniumchlorid), Polyethylenimin, ethoxyliertem Polyethylenimin sowie Polydimethylaminoacrylat besteht.

8. Die Tintenstrahltinte gemäß Anspruch 1, bei der das Farbmittel und das polymere Latexbindemittel in einem Verhältnis zwischen 10:1 und 1:10 vorliegen.

9. Die Tintenstrahltinte gemäß Anspruch 1, bei der der Zusatzstoff zu zwischen 0,005 und 50 Gewichtsprozent in der Tinte vorliegt.

10. Die Tintenstrahltinte gemäß Anspruch 1, bei der die Tinte folgendes aufweist:
5 bis 50 Gewichtsprozent eines mit Wasser mischbaren Lösungsmittels;
0,5 bis 10 Gewichtsprozent Farbmittel;
0,1 bis 10 Gewichtsprozent zumindest eines der polymeren Latexbindemittel;
0,01 bis 10 Gewichtsprozent zumindest eines der Amin enthaltenden Zusatzstoffe; und
Wasser.

## Revendications

1. Une composition d'encre pour l'impression par jet d'encre comprenant un véhicule et un colorant, dans laquelle ladite composition inclut en outre au moins un liant latex polymère pour augmenter la résistance aux tachetures de ladite composition, et un additif contenant une amine dans ledit véhicule, ledit liant latex polymère ayant une formule donnée par :
[(A)ₘ (B)ₙ (C)ₚ (D)_{q} (E)ᵣ (F)ₛ]ₓ
dans laquelle A, B, C, D, E et F sont des parties de molécules, comme suit :
A = au moins un composant hydrophobe qui contribue aux propriétés améliorées et durables de formation de film, sélectionné à partir de parties de molécules qui, lorsqu'on les homopolymérise à l'état solide, ont une température de transition vitreuse (T_{g}) se situant dans la plage allant de - 150°C à + 25°C, où ladite partie de molécule monomère A est :
C(R₁) (R₂) = C (R₃) R₄ R₅,
dans laquelle R₁ et R₂ sont indépendamment un groupe hydrogène, halogène, alkyle, aryle ou alkyle ou aryle substitué, ou butyral vinylique ;
R₃ est un groupe hydrogène, halogène, alkyle saturé ou insaturé, alkoxy, aryle, ou alkyle, alkoxy ou aryle substitué ;
R₄ est une liaison directe, un O, CO, NH, halogène, alkyle, aryle saturé ou insaturé, ou alkyle, aryle substitué ou CN ;
R₅ est absent (si R₄ est alkyle, aryle, ou alkyle ou aryle substitué), une liaison directe, un groupe hydrogène, NH, O, alkyle, alkylène, aryle, ou alkyle, alkylène ou aryle substitué ; et
R₆ est absent (si R₄ est un groupe alkyle, aryle ou alkyle ou aryle substitué, ou si R₅ est un groupe hydrogène, alkyle, aryle ou alkyle ou aryle substitué), un groupe NH₂, alkyle, alkoxy, aryle, aroxy saturé ou insaturé, ou alkyle ou aryle substitué, et dans lesquels lesdits groupes alkyle, alkylène, aryle, alkoxy et aroxy contiennent chacun plus d'un atome de carbone et moins de 40 atomes de carbone ;
B = au moins une partie de molécule hydrophobe et faisant barrière aux solvants qui est utilisée pour ajuster la T_{g} du composant hydrophobe dudit polymère qui, lorsqu'il est homopolymérisé à un état solide, a une T_{g} supérieure à 25°C, dans laquelle ladite partie de molécule monomère B est :
CR₁R₂ = C(R₃) R₄ R₅ R₆
où R₁ et R₂ sont indépendamment sélectionnés parmi l'hydrogène, le halogène et le butyral vinylique ;
R₃ est un groupe hydrogène, halogène, alkyle, alkylène, aryle ou alkyl, alkoxy, alkylène ou aryle substitué,
R₄ est une liaison directe, un O, CO, N, NO₂, halogène, alkyle, alkylène, aryle ou aryle, alkylène, aryle substitué ;
R₅ est un hydrogène, N, O, alkyle, alkylène, aryle ou alkyle, alkylène ou aryle substitué, et
R₆ est un groupe alkyle, alkoxy, alkylène, aryle, aroxy ou alkyle, alkylène ou aryle substitué, et où lesdits groupes alkyle, alkylène, aryle, alkoxy et aroxy contiennent chacun de 1 à 40 atomes de carbone, où R₁ et R₂ et R₂ et R₃ peuvent chacun former un cycle, et où R₄ et R₅ peuvent former un cycle via l'azote ou l'oxygène ;
C = au moins un composant hydrophobe comprenant un monomère hydrosoluble, où ladite partie de molécule monomère C est sélectionnée à partir du groupe constitué de :
(a) 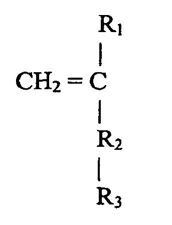
dans laquelle :
R₁ = un groupe H, halogène, alkyle, aryle ou alkyle ou aryle substitué
R₂ = une liaison directe, un O, CO, NH, ou CONH
R₃ = un groupe OH, (CH₂CH₂O)_{y}R₄, (CH₂CH (CH₃)O)_{y}R₄, ou (CH₂CH (C₂H₅)O)_{y}R₄, SH, (CH₂CH₂S)_{y}R₄, (CH₂CH (CH₃)S)_{y} R₄, ou (CH₂CH (C₂H₅)S)_{y}R₄ ;
y = 1 à 200 ; et
R₄ = un groupe alkyle, aryle, alkyle ou aryle substitué
(b) 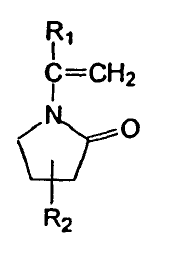
dans laquelle R₁ et R₂ sont indépendamment sélectionnés parmi les groupes H, halogène, alkyle, aryle et alkyle et aryle substitués, dans lesquels lesdits groupes alkyle et aryle contiennent chacun de 2 à 40 atomes de carbone ;
(c) 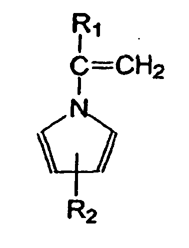
dans laquelle R₁ et R₂ sont indépendamment sélectionnés parmi les groupes de H, halogène, alkyle, aryle et alkyle et aryle substitué ;
(d) 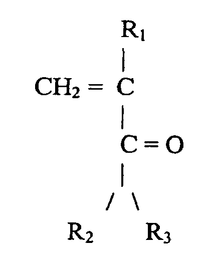
dans laquelle R₁ = un groupe H, halogène, alkyle, aryle ou alkyle ou aryle substitué ; et
R₂ et R₃ sont soit sélectionnés indépendamment à partir des groupes alkyle, aryle et alkyle et aryle substitué, ou peuvent former soit un cycle aliphatique, soit un cycle aromatique ;
D = au moins un absorbeur d'UV;
E = au moins une partie de molécule ayant au moins un groupe fonctionnel fortement polaire ;
F = une partie de molécule ayant au moins un groupe fonctionnel aldéhyde
m = de 10 à 90 % en poids ;
n = de 10 à 90 % en poids ;
p = de 0 à 60 % en poids
q = de 0 à 50 % en poids
r = de 0 à 40 % en poids
s = de 1 à 30 % en poids
m + n + p + q + r + s = 100 % en poids; et
x = de 1 à 100.000,
dans laquelle ledit polymère a soit des parties de molécules hydrophobes et hydrophiles, soit des parties de molécules hydrophobes uniquement et est associé audit tensioactif pour former un système polymère/tensioactif, ledit polymère ou système polymère/tensioactif étant capable de former un film à partir de l'eau qui, lorsque l'eau s'évapore, est essentiellement résistant à l'eau, ledit polymère ayant une T_{g} se situant dans la plage allant de -10°C à °110°C, ledit additif contenant une amine étant essentiellement constitué d'une amine, d'une polyamine ou d'un alcool d'amine hydrosoluble ou dispersible dans l'eau, ledit alcool d'amine ayant une formule donnée par : 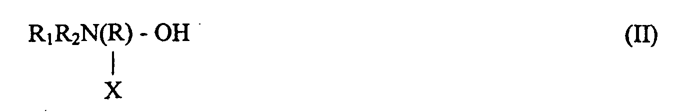
où R₁ et R₂ sont indépendamment sélectionnés à partir du groupe constitué de l'hydrogène, de l'alkyle, de l'alkoxy, de l'aryle et du phénoxy, R est un groupe alkylène, X est un groupe d'hydrogène, alkyle, aryle, -OH, -COOH et -CHO- ; à condition qu'au moins l'une des parties de molécules C et E soit présente dans le polymère.

2. Encre pour l'impression par jet d'encre selon la revendication 1, dans laquelle ledit liant polymère a une formule donnée par :
[(A)ₘ (B)ₙ (C')ₚ (F)ₛ]ₓ
dans laquelle :
A = au moins un composant hydrophobe qui contribue aux propriétés améliorées et durables de formation de film, sélectionné parmi les parties de molécules qui, lorsqu'on les homopolymérise à un état solide, ont une température de transition vitreuse (T_{g}) inférieure à 25°C ;
B = au moins une partie de molécule hydrophobe et de barrière aux solvants utilisée pour ajuster la Tg du composant hydrophobe dudit polymère qui, lorsqu'on l'homopolymérise à un état solide, a une Tg supérieure à 25°C ;
C' = au moins un composant hydrophile comprenant un monomère hydrosoluble qui est soit ionique, soit non ionique ;
F = au moins une partie de molécule ayant un groupe fonctionnel aldéhyde ;
m < 30 % en poids
n > 40 % en poids ;
p < 30 % en poids ; et
s < 30 % en poids,
et dans laquelle ledit alcool d'amine, X est de l'hydrogène.

3. Composition d'encre pour l'impression par jet d'encre selon la revendication 1, dans laquelle ladite partie de molécule D est sélectionné dans le groupe constitué de : 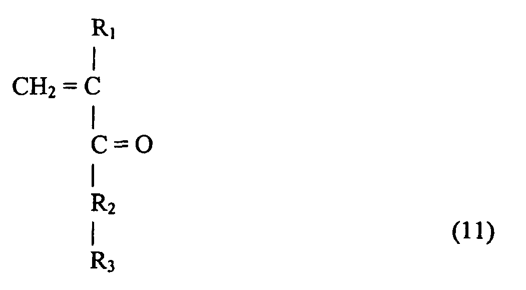
R₁ = un groupe H, alkyle, aryle, alkyle ou aryle substitué
R₂ = un groupe O ou NH
R₃ =

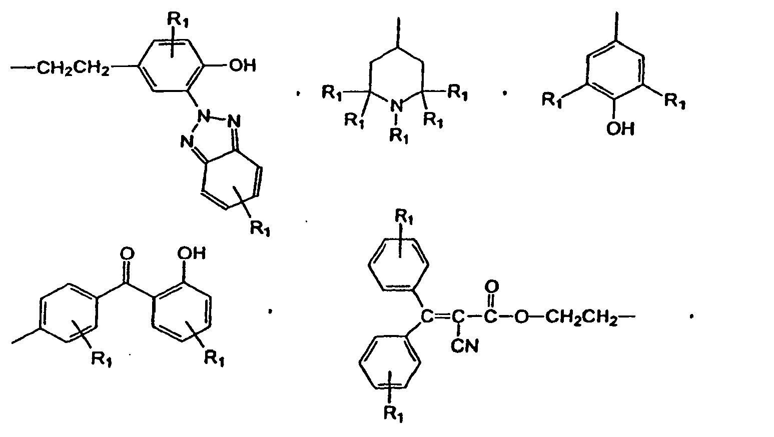

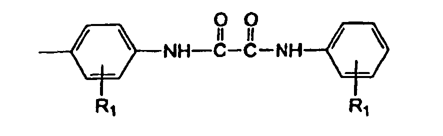

4. Composition d'encre pour l'impression par jet d'encre selon la revendication 1, dans laquelle ladite partie de molécule E est sélectionnée dans le groupe constitué de :
(a)
CH (R₁) = C (R₂) R₃ COOH
dans laquelle R₁ = un groupe H, COOH, COOR₄;
R₂ = un H, halogène, alkyle, aryle, alkoxy, alkyle, aryle ou alkoxy substitué ;
R₃ = une liaison directe, un groupe alkylène, arylène ou alkylène ou arylène substitué ; et
R₄ = un groupe alkyle, aryle ou alkyle ou aryle substitué ;
(b)
CH₂ = CHR₁ NR₂ R₃
dans laquelle R₁ = un groupe alkylène, arylène, alkylène ou arylène substitué, ou SO₂ ; et
R₂ et R₃ sont soit sélectionné indépendamment à partir des groupes H, alkyle, aryle et alkyle, aryle et alkoxy substitués, soit ils forment un cycle aliphatique ou un cycle aromatique ;
(c)
y (CH₂ = CHR₁ COO⁻) M^{y+}
dans laquelle R₁ = un groupe alkylène, arylène, alkylène ou arylène substitué ;
y=1 à 4; et
My⁺ = NH₄⁺ , Li⁺, Na⁺, K⁺, Ca²⁺, Mg²⁺, Al³⁺ Ti⁴⁺, triéthylammonium, diéthylanunonium et pyrridinium ;
(d)
z (CH₂ = CHR₁ N⁺ R₂R₃R₄) X_{z}⁻
dans laquelle R₁ = un groupe alkylène, arylène, alkylène ou arylène substitué, COO ou un anneau cyclique contenant de l'azote ;
R₂, R₃ et R₄ sont indépendamment sélectionnés à partir des groupes H, alkyle, aryle, alkoxy et alkyle, aryle et alkoxyle substitués ;
z= 1 à 4; et
X = un groupe halogène, BF₄, PF₆, ClO₄, SCN, CNO, CNS ;
(e) 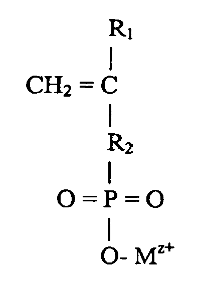
dans laquelle R₁ = un groupe alkyle, aryle, alkoxyle, alkyle, aryle ou alkoxyle substitué ;
R₂ = une liaison directe, un groupe COOR₃, arylène, alkylène ou - CONHR₃ ;
R₃ = un groupe alkylène, arylène ou alkylène ou arylène substitué, ou fluoroalkylène ;
z = 1 à 4 ; et
M^{z+} = NH⁴⁺, Li⁺, Na⁺, Ca²⁺, Mg²⁺, Al³⁺, Ti⁴⁺ ; triéthylammonium, diéthylammonium et pyrridinium ;
(f) 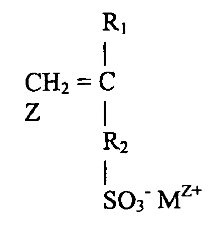
dans laquelle R₁ = un groupe alkyle, aryle, alkoxyle, alkyle, aryle ou alkoxyle substitué ;
R₂ = une liaison directe, un groupe COOR₃, arylène, alkylène ou - CONHR₃ ;
R₃ = un groupe alkylène, arylène ou alkylène ou arylène substitué, ou fluoroalkylène ;
z = 1 à 4 ; et
M^{z+} = NH₄⁺, Li⁺, Na⁺, Ca²⁺, Mg²⁺, Al³⁺, Ti⁴⁺;
(g) 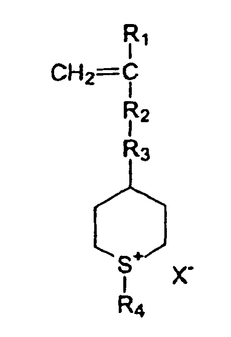
dans laquelle R₁ = un groupe -H, halogène, alkyle ou aryle ;
R₂ = > CO, -O- ; .
R₃ = une liaison directe, > NH ;
R₄ = un groupe alkyle ou aryle ; et
X = Cl, Br, BF₄, ClO₄, I ou NO₃ ;
(h) 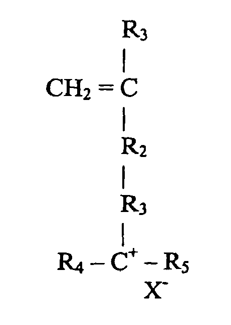
dans laquelle R₁ = un groupe -H, halogène, alkyle ou aryle ; R₂ = > CO, -O- ;
R₃ = une liaison directe, >NH, alkylène ou arylène ;
R₄ et R₅ sont indépendamment sélectionnés à partir de l'alkyle ou de l'aryle ; et
X = SbF₅⁻ ; FSO₃⁻ ;
(i) 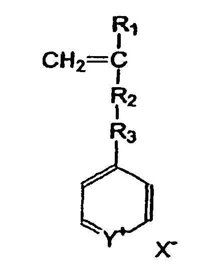
dans laquelle Y = O ou S ;
R₁ = -H, halogène, alkyle ou aryle ;
R₂ = > CO, -O- ;
R₃ = une liaison directe, > NH, alkylène ou arylène ;
X = Cl, Br, I, ClO₄, BF₄ ; et
(j) un sel de tétrazolium.

5. La composition d'encre pour impression par jet d'encre selon la revendication 1, dans laquelle ladite partie de molécule F est de l'acroléine.

6. L'encre pour impression par jet d'encre selon la revendication 1, dans laquelle ledit polymère est sélectionné dans le groupe constitué de : (acrylate d'héxyle)₂₀ (méthacrylate de méthyle)₂₀ (acrylamide)₅₀ (acroléine)₁₀ ; (styrène)₃₄ (méthacrylate de méthyle)₈ (pyrrolidone vinylique)₅₀ (acroléine)₈ ; (styrène)₂₀ (méthacrylate de méthyle)₂₀ (acrylamide)₅₀ (acroléine)₁₀ ; (acrylate d'héxyle)₂₀ (méthacrylate de méthyle)₂₀ (poly(éthylène glycol) éther acrylate de méthyle, masse moléculaire = 404)₆₀ (acroléine)₁₀ ; (acrylate d' héxyle)₁₀ (méthacrylate de méthyle); (poly(éthylène glycol) éther acrylate de méthyle, masse moléculaire 404)₆₀ (acroléine)₂₀ ; (acrylate d'héxyle)₂₀ (méthacrylate de méthyle)₂₀ (acrylamide)₅₀ (méthacroléine)₁₀ ; (styrène)₃₄ (méthacrylate de méthyle)₈ (pyrrolidone de vinyle)₅₀ (méthacroléine)₈ ; (styrène)₂₀ (méthacrylate de méthyle)₂₀ (arylamide)₅₀ (méthacroléine)₁₀ ; (acrylate d'héxyle)₂₀ (méthacrylate de méthyle)₂₀ (poly(éthylène glycol) éther acrylate de méthyle, masse moléculaire = 404)₆₀ (méthacroléine)₁₀ ; (acrylate d' héxyle)₂₀ (méthacrylate de méthyle)₂₀ (poly(éthylène glycol éther acrylate de méthyle, masse moléculaire = 2054)₆₀ (méthacroléine)₁₀ ; (acrylate d' héxyle)₂₀ (méthacrylate de méthyle)₂₀ (poly(éthylène glycol) éther acrylate de méthyle, masse moléculaire = 2054)₆₀ (acroléine)₁₀ ; (acrylate d' héxyle)₁₀ (méthacrylate de méthyle)₁₀ (poly(éthylène glycol) éther acrylate de méthyle, masse moléculaire = 404)₆₀ (méthacroléine)₂₀ ; (méthacrylate de lauryle)₄₃ (méthacrylate de méthyle)₁₁ (acide acrylique)₂₁ (sulfonate de styrène, sel sodique)₂₂ (méthacroléine)₃ ; (méthacrylate de lauryle)₄₃ (méthacrylate de méthyle)₁₁ (acide acrylique21 (sulfonate de styrène, sel sodique)₂₂ (acroléine)₃.

7. La composition d'encre pour impression par jet d'encre selon la revendication 1, dans laquelle ledit alcool d'amine est sélectionné dans le groupe constitué de l'éthanolamine, du diméthylaminopropanol, de l'aminobutanol est des dérivés de celui-ci, du dipropylaminopropane diol, de l'amino propane diol, du 2 (2-éthyl-éthoxyamino éthanol), du diméthylaminobutanol, du 2-(diisopropylamino) éthanol, de la diisopropanol amine, de l'hydroxyquinone, du 3- (2-hydroxyéthylamino) - 5 - diméthyl - 2 - cyclohéxène - 1 - one, du 3 - (1 - hydroxyéthyl) aniline, du 4 - morpholine éthanol et du 3 - morpholino - 1,2 - propane diol, dans lesquels ladite amine est sélectionnée à partir du groupe constitué de la 1,4 - bis (3 - aminopropyl) pipérazine, de la diméthylamine, du 1 - méthylimidazole, de l'éthylène diamine, de la pipéridine, de la pipérazine, du 1 - pipéridine éthanol, du 2 - pipéridine éthanol, du 3 - pipéridine méthanol et du et du 2 - pipéridine méthanol, et dans lesquels ladite polyamine est sélectionnée dans le groupe constitué de la poly (diméthylamine - co - épichlorohydrine), du poly (chlorure de diallyl diméthyl ammonium) de la polyéthylène imine, de la polyéthylène imine éthoxylée et du polydiméthyl aminoacrylate.

8. La composition d'encre pour impression par jet d'encre selon la revendication 1, dans laquelle ledit colorant et ledit liant polymère de latex sont présents dans un rapport allant de 10 :1 à 1 :10.

9. L'encre pour impression par jet d'encre selon la revendication 1, dans laquelle ledit additif est présent dans ladite encre à un niveau allant de 0,005 à 50 % en poids.

10. L'encre pour impression par jet d'encre selon la revendication 1, dans laquelle ladite encre comprend :
de 5 à 50 % en poids d'un solvant miscible dans l'eau ;
de 0,5 à 10 % en poids de colorant ;
de 0,1 à 10 % en poids d'au moins un liant polymère de latex ;
de 0,01 à 10 % en poids d'au moins l'un desdits additifs contenant une amine ; et
de l'eau.
